(19) Europäisches Patentamt
European Patent Office
Office européen des brevets

(11) EP 4 129 610 B1

(12) **EUROPEAN PATENT SPECIFICATION**

(45) Date of publication and mention of the grant of the patent:
**13.08.2025 Bulletin 2025/33**

(21) Application number: **21781200.7**

(22) Date of filing: **30.03.2021**

(51) International Patent Classification (IPC):
***B29C 41/14*** (2006.01) ***B29C 41/36*** (2006.01)
***C08G 59/42*** (2006.01) ***C08F 236/04*** (2006.01)
***C08L 13/00*** (2006.01) ***C08L 63/00*** (2006.01)
***A41D 19/00*** (2006.01) ***A41D 19/04*** (2006.01)
***C08K 3/22*** (2006.01)

(52) Cooperative Patent Classification (CPC):
(C-Sets available)
**B29C 41/14; C08K 3/22; C08K 5/0016;**
**C08K 5/1515;** A41D 19/0058 (Cont.)

(86) International application number:
**PCT/JP2021/013597**

(87) International publication number:
**WO 2021/200984 (07.10.2021 Gazette 2021/40)**

# (54) COMPOSITION FOR DIP MOLDING AND MOLDED BODY THEREOF

ZUSAMMENSETZUNG ZUM TAUCHFORMEN UND FORMKÖRPER DARAUS

COMPOSITION POUR MOULAGE PAR IMMERSION ET CORPS MOULÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2020 JP 2020065224**
**25.09.2020 JP 2020161304**

(43) Date of publication of application:
**08.02.2023 Bulletin 2023/06**

(73) Proprietors:
- **Midori Anzen Co., Ltd.**
  **Tokyo 150-8455 (JP)**
- **BST Specialty Co., Ltd.**
  **Bangkok, 10500 (TH)**

(72) Inventors:
- **ENOMOTO, Norihide**
  **Tokyo 150-8455 (JP)**
- **MORINAGA, Atsushi**
  **Tokyo 150-8455 (JP)**
- **OTA, Hisanori**
  **Thungmahamek, Sathorn, Bangkok, 10120 (TH)**

(74) Representative: **Gill Jennings & Every LLP**
**The Broadgate Tower**
**20 Primrose Street**
**London EC2A 2ES (GB)**

(56) References cited:

| | |
|---|---|
| **EP-A1- 3 459 375** | **EP-A1- 3 473 121** |
| **EP-A1- 3 575 357** | **WO-A1-2005/012375** |
| **WO-A1-2019/102985** | **WO-A1-2019/102985** |
| **WO-A1-2019/194056** | **WO-A1-95/27012** |
| **JP-A- 2006 321 954** | **JP-A- 2006 321 954** |
| **JP-A- 2013 203 914** | **US-A1- 2005 067 729** |
| **US-A1- 2009 105 424** | **US-A1- 2020 216 668** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/22, C08L 9/02;**
**C08K 3/22, C08L 33/20;**
**C08K 5/0016, C08L 9/02;**
**C08K 5/0016, C08L 33/20;**
**C08K 5/1515, C08L 9/02;**
**C08K 5/1515, C08L 33/20**

## Description

TECHNICAL FIELD

The present invention relates to a dip molding composition, and a molded article thereof.

BACKGROUND ART

Molded articles obtained by dip molding a latex composition of natural rubber or synthetic rubber, such as gloves, condoms, catheters, tubes, balloons, nipples, and fingerstalls, are known.

Molded articles obtained from natural rubber have a high stress retention rate inherent to rubber and are flexible with excellent rubber elasticity; however, since natural rubber latexes contain a protein that causes type I allergic symptoms in the human body, many problems have been reported in such products that come into direct contact with the human body.

On the other hand, molded articles obtained from a synthetic rubber do not contain such a protein and are thus advantageous in that they have little problem relating to type I allergy. As the synthetic rubber, isoprene rubber, chloroprene rubber, and carboxyl group-containing acrylonitrile-butadiene rubber (XNBR) are known. Thereamong, isoprene rubber has a structure similar to that of natural rubber, and has a high stress retention rate and a flexible rubber elasticity that are comparable to those of natural rubber. Further, chloroprene is structurally butadiene that is partially chlorinated, and has a relatively high stress retention rate and a flexible rubber elasticity similarly to isoprene rubber. However, these rubbers both have a drawback of being very expensive.

Isoprene monomer, which is a raw material of isoprene rubber, is produced by dimerization of propylene, dehydrogenation of isoamylene, solvent extraction of C5 fraction or the like, and requires chemical reactions and a complex production process as opposed to butadiene that is obtained in a large amount from rectification of C4 fraction in the petroleum production. Further, polymerization of isoprene monomer is performed by solution polymerization and, after isoprene rubber is produced, a solvent is separated and the resultant is made into an emulsified product with water to obtain an isoprene rubber latex for dipping. In this manner, in order to obtain a molded article from isoprene rubber, a production process including a variety of chemical reactions is required.

Meanwhile, chloroprene is industrially mainly produced by a method in which monovinylacetylene obtained by dimerization of acetylene is allowed to undergo an addition reaction with hydrochloric acid, and thus cannot be produced inexpensively.

On the other hand, XNBR, which is obtained by copolymerization of butadiene, acrylonitrile and an unsaturated carboxylic acid, can be inexpensively mass-produced and is thus often used in the production of dip-molded articles. Conventionally, molded articles are produced by covalently bonding butadiene residues using sulfur and a vulcanization accelerator and ionically crosslinking carboxyl groups (X) with zinc; however, since type IV allergy caused by a vulcanization accelerator has become a problem, accelerator-free molded articles in which neither sulfur nor vulcanization accelerator is used have been proposed in recent years. For example, dip-molded articles obtained by self-crosslinking using a crosslinkable organic compound (Patent Document 1), crosslinking using an organic crosslinking agent such as a polycarbodiimide compound or an epoxy compound (Patent Documents 2 and 3), or crosslinking using a metal cross-linking agent such as aluminum, which is similar to covalent bonding (Patent Document 4), have been proposed.

As described above, XNBR is obtained by copolymerization of butadiene, acrylonitrile, and an unsaturated carboxylic acid. The double bonds of butadiene are responsible for the properties of rubber. In this sense, butadiene is a base component. Acrylonitrile and the unsaturated carboxylic acid are components that modify the properties of XNBR through copolymerization with butadiene and, depending on the content of these components, a variety of properties such as chemical resistance, tensile strength, elongation rate, and modulus can be provided.

Further, in XNBR, the film forming properties of a latex obtained therefrom, the ease of production, and the physical properties are affected by adjusting the polymerization temperature, a chain transfer agent, a polymerization method, and a polymerization conversion rate.

Taking gloves as an example, in recent years, XNBR produced by low-temperature polymerization has been mainly used to improve the tensile strength of thin gloves, yielding molded articles having satisfactory tensile strength and elongation rate. By the low-temperature polymerization, XNBR is produced as a linear polymer, and the tensile strength of XNBR itself is improved. In addition, in the resulting linear XNBR latex, when the pH is brought to the alkaline side, the carboxylic acid of XNBR is easily ionized to generate carboxylate ions and these carboxylate ions are oriented to the surfaces of XNBR particles, so that metal ion crosslinks are likely to be formed by metal ions, and the interparticle strength is improved. On the other hand, in the linear XNBR, since the rubber elasticity is lower than that of a branched XNBR, the rubber elasticity, for example, the stress retention rate and the flexibility as basic physical properties, is inferior to that of natural rubber.

RELATED ART DOCUMENTS

PATENT DOCUMENTS

[Patent Document 1] WO 2012/043894
[Patent Document 2] WO 2017/217542
[Patent Document 3] WO 2019/194056
[Patent Document 4] Japanese Unexamined Patent Application Publication No. 2018-9272 [Patent Document 5] EP 3 575 357 A1 discloses a glove formulation contanining an epoxy cross-linking agent.

SUMMARY OF THE INVENTION

PROBLEMS TO BE SOLVED BY THE INVENTION

As described above, various crosslinking methods have been proposed for XNBR; however, satisfactory stress retention rate and flexibility cannot be obtained by these methods, and improvement is thus desired.

In view of this, an object of the present invention is to provide a glove in which, using a carboxyl group-containing nitrile rubber elastomer such as XNBR, not only the stress retention rate and the flexibility are improved but also the wearability, the fit, the tightening of cuff portion, and the ease of fine operations with fingertips are thereby improved while maintaining a tensile strength and a fatigue durability that are required for a glove.

MEANS FOR SOLVING THE PROBLEMS

The present inventors intensively studied to solve the above-described problems and consequently discovered that a molded article having a high stress retention rate while maintaining a low modulus (flexibility) can be produced by using an elastomer provided with appropriate crosslinked structures, particularly an elastomer having an MEK-insoluble content in a specific range, and using a specific organic crosslinking agent to perform crosslinking in the step of producing a dip-molded article from a dip molding composition containing the elastomer, thereby completing the present invention.

[1] A dip molding composition, containing at least:

a carboxyl group-containing nitrile rubber elastomer;
an epoxy crosslinking agent containing an epoxy compound that contains three or more glycidyl ether groups in one molecule and has a basic skeleton containing an alicyclic, aliphatic or aromatic hydrocarbon; and
a pH modifier,
wherein
the elastomer contains 50% by weight or more, 78% by weight or less of a conjugated diene monomer-derived structural unit, 20% by weight or more, 30% by weight or less of an ethylenically unsaturated nitrile monomer-derived structural unit, and 3.5% by weight or more, 6% by weight or less of an ethylenically unsaturated carboxylic acid monomer-derived structural unit,
the elastomer has an MEK-insoluble content of 60% by weight or more, 80% by weight, and
the epoxy crosslinking agent has an MIBK/water distribution ratio of 50% or higher as determined by the following measurement method:
Method of measuring the MIBK/water distribution ratio: in a test tube, 5.0 g of water, 5.0 g of methyl isobutyl ketone (MIBK) and 0.5 g of the epoxy crosslinking agent are precisely weighed and mixed with stirring at 23°C $\pm$ 2°C for 3 minutes, and the resulting mixture is centrifuged at 1.0 $\times$ $10^3$ G for 10 minutes and thereby separated into an aqueous layer and an MIBK layer, after which the MIBK layer is fractionated and weighed to calculate the MIBK/water distribution ratio using the following equation:

MIBK/water distribution ratio (%) = (Weight of separated MIBK layer (g) - Weight of MIBK before separation (g))/Weight of added crosslinking agent (g) $\times$ 100

this measurement is performed three times, and an average value thereof is defined as the MIBK/water distribution ratio.

[2] The dip molding composition according to [1], wherein the elastomer contains 3.5% by weight or more, 5.0% by weight or less of the ethylenically unsaturated carboxylic acid monomer-derived structural unit.
[3] The dip molding composition according to [1] or [2], wherein the epoxy crosslinking agent is added in an amount of 0.3 parts by weight or more, 2.5 parts by weight or less with respect to 100 parts by weight of the elastomer.
[4] The dip molding composition according to any one of [1] to [3], wherein the pH is adjusted to be 9.5 or higher, 10.5 or lower by the pH modifier.
[5] The dip molding composition according to any one of [1] to [4], further containing zinc oxide as a crosslinking agent.
[6] The dip molding composition according to [5], wherein zinc oxide is added in an amount of 0.2 parts by weight or more, 0.6 parts by weight or less with respect to 100 parts by weight of the elastomer.
[7] The dip molding composition according to any one of [1] to [6], having an MEK swelling rate of 5 times or higher, 10 times or lower.
[8] A molded article, which is a cured product of the dip molding composition according to any one of [1] to [7].
[9] The molded article according to [8], having a stress retention rate of 50% or higher as determined by the following measurement method:
Method of measuring the stress retention rate: in accordance with ASTM D412, a test piece is prepared, marked with lines at a gauge mark distance of 25 mm, and stretched at a chuck distance of 90 mm and a tensile speed of 500 mm/min; once the test piece is stretched two fold, the stretching is terminated to measure a stress M0; the test piece is maintained and a stress M6 is measured after a lapse of 6 minutes; and the stress retention rate is calculated using the following equation:

$$\text{Stress retention rate (\%)} = (M6/M0) \times 100.$$

[10] The molded article according to [8] or [9], which is a glove.
[11] A method of producing a dip-molded article, the method including:

(1) a coagulant adhesion step of allowing a coagulant to adhere to a glove forming mold;
(2) a maturation step of preparing and stirring the dip molding composition according to any one of [1] to [7];
(3) a dipping step of immersing the glove forming mold in the dip molding composition;
(4) a gelling step of gelling a film formed on the glove forming mold to prepare a cured film precursor;
(5) a leaching step of removing impurities from the cured film precursor thus formed on the glove forming mold;
(6) a beading step of making a roll in a cuff portion of a glove to be obtained; and
(7) a curing step of heating and drying the cured film precursor at a temperature required for crosslinking reaction,

which steps (3) to (7) are performed in the order mentioned.

## EFFECTS OF THE INVENTION

According to the present invention, a dip molding composition to be used for the production of a molded article such as a glove, in which not only the basic physical properties required for a molded article such as a glove, for example, tensile strength, elongation rate and fatigue durability, are satisfied but also the stress retention rate and the modulus are largely improved as compared to conventional molded articles, can be provided. In addition, according to this dip molding composition, a molded article that has the above-described properties even without containing a latex protein causing type I allergy or a vulcanization accelerator causing type IV allergy can be obtained.
The present invention can be applied to not only gloves, but also molded articles such as condoms, catheters, tubes, balloons, nipples, and fingerstalls.

## BRIEF DESCRIPTION OF THE DRAWING

[FIG. 1] FIG. 1 provides cross-sectional views that schematically illustrate one example of a fatigue durability test apparatus.

## MODE FOR CARRYING OUT THE INVENTION

Embodiments of the present invention will now be described in detail; however, the following descriptions are merely examples (representative examples) of the embodiments of the present invention, and the present invention is not limited to the contents thereof as long as they do not depart from the gist of the present invention.
It is noted here that, "weight" and "mass" have the same meaning and are thus hereinafter collectively stated as

"weight".

In the present specification, unless otherwise specified, "%" means "% by weight" and "part(s)" means "part(s) by weight".

Further, unless otherwise specified, in principle, "part(s) by weight" indicates the number of parts by weight with respect to 100 parts by weight of an elastomer.

In the present specification, those ranges that are stated with "to" before and after numerical or physical property values each denote a range that includes the respective values stated before and after "to".

The respective embodiments of the present invention are: a composition for dip molding (hereinafter, also simply referred to as "dip molding composition") that is used for producing a dip-molded article of a nitrile rubber elastomer containing carboxyl groups (hereinafter, also simply referred to as "carboxyl group-containing nitrile rubber elastomer"), which has a high stress retention rate and is flexible; a method of producing a molded article using the composition; and a molded article produced using the composition. Accordingly, in these present embodiments, crosslinked structures are introduced into the carboxyl group-containing nitrile rubber elastomer in advance to improve the rubber elasticity, and crosslinking is performed using an epoxy crosslinking agent that penetrates into latex particles composed of the elastomer and is capable of performing intraparticle crosslinking, whereby a high stress retention rate is achieved in a molded article. In the present specification, the stress retention rate is used as one of the indices that define a dip-molded article having good elasticity. The stress retention rate, which indicates a ratio of a stress that is applied to a dip-molded article during stretching and remains after a certain period with respect to an initial value, represents how much stress is retained for retuning back to an original state.

Further, the present inventors confirmed that: a molded article that is flexible despite having a high stress retention rate can be obtained by, for example, reducing the amount of carboxylic acid as much as possible; and, with regard to the flexibility, the molded article according to the present embodiment is more flexible than those of prior art based on the 100% modulus, 300% modulus, and 500% modulus. The term "modulus" used herein refers to a stress measured at 100%, 300% or 500% elongation. The lower the stress value, the more flexible is the molded article.

Hereinafter, the dip molding composition used for producing a dip molded article, the method of producing a molded article using the composition, and the molded article produced using the composition, which are according to the respective embodiments of the present invention, will be described. In this process, the characteristic features of the carboxyl group-containing nitrile rubber elastomer and the epoxy crosslinking agent will be described.

The term "carboxyl group-containing nitrile rubber elastomer" used herein refers to a polymer that can be obtained by polymerizing monomers, such as conjugated diene, an ethylenically unsaturated nitrile monomer, and an ethylenically unsaturated carboxylic acid monomer (such a polymer is hereinafter also simply referred to as "elastomer"). Further, a composition containing an elastomer obtained by emulsion polymerization is hereinafter referred to as "synthetic latex composition" or simply "latex composition", and particles of an elastomer dispersed in a synthetic latex composition are hereinafter referred to as "latex particles" or simply "particles".

## 1. Dip Molding Composition

The dip molding composition according to the present embodiment (hereinafter, also simply referred to as "dip molding composition") contains, as indispensable components, a carboxyl group-containing nitrile rubber elastomer and an epoxy crosslinking agent that are described below one by one, and is usually in the form of a mixed solution with water in which the pH is adjusted by a pH modifier. The dip molding composition may additionally contain zinc oxide, and usually further contains necessary components.

### (1) Carboxyl Group-Containing Nitrile Rubber Elastomer

#### <Crosslinked Structures of Carboxyl Group-Containing Nitrile Rubber Elastomer>

The carboxyl group-containing nitrile rubber elastomer is characterized in that it is provided with an MEK-insoluble content of 60% by weight or more, 80% by weight or less by introducing crosslinked structures in advance at the time of emulsion polymerization. The crosslinked structures introduced in the polymerization step of the elastomer contained in a latex composition improves the crosslink density of a dip-molded article and contributes to expression of a stress retention rate. By using this latex composition, a dip-molded article which is flexible and has a high stress retention rate like a natural rubber molded article despite being molded from a dip molding composition containing a synthetic latex composition can be provided.

A technology of obtaining desired performance by introducing crosslinked structures to an elastomer contained in a latex composition in advance and thereby providing a minimum required amount of crosslinked structures at the time of an immersion process has been generally employed as a pre-vulcanization technology in natural rubber latex compositions; however, in a synthetic latex composition, it is difficult to obtain appropriate physical properties using such a

technology since the film-forming properties of a synthetic latex composition are greatly inferior to those of a natural rubber latex composition. In the case of producing a molded article by an immersion process using a synthetic latex composition such as a latex composition that contains a carboxyl group-containing nitrile rubber elastomer, it is required to introduce crosslinked structures concurrently with the film forming step. Conventionally, there are occasionally cases where an immersion-processed article is produced using a partially crosslinked synthetic latex composition; however, when an immersion process using a synthetic latex composition having 60% by weight or more of crosslinked structures is performed prior to the film forming step, there are problems that the resulting dip-molded article has poor physical strength and its durability is greatly reduced.

The composition according to the present embodiment already has crosslinked structures in a synthetic latex composition; therefore, a dip-molded article having satisfactory physical properties and performance can be obtained therefrom only by introducing a minimum amount of crosslinked structures during the production of the dip-molded article. In addition, the dip-molded article obtained in this manner characteristically has a very soft texture and an excellent stress retention rate.

In the present invention, the crosslinked structures provided in the step of polymerizing the elastomer contained in the synthetic latex composition is preferably at a level of 60% by weight or more, 80% by weight or less of all crosslinked structures that are eventually introduced. The crosslinked structures introduced in the step of polymerizing the elastomer contained in the synthetic latex composition are different from those crosslinked structures introduced during molding of a general latex or rubber in terms of chemical bond type and, when a polymerization reaction proceeds by radical polymerization, crosslinked structures can be controlled and generated by addition of radicals to polymer side chains, chain transfer, and the like. The crosslinked structures generated in the polymerization step of the synthetic latex composition are carbon-carbon bonds, ester bonds, hydrogen bonds, coordination structures and the like, and carbon-carbon bonds are stronger and provide a final molded article with a better balance between flexibility and stress retention rate.

The degree of crosslinked structures can be determined by, as a measurement method having good reproducibility, measuring the degree of dissolution of a polymer in a solvent that has a polarity similar to that of the polymer. When the polymer is a carboxyl group-containing acrylonitrile-butadiene rubber (XNBR), the degree of crosslinked structures can be estimated by measuring the amount of insoluble components using methyl ethyl ketone (MEK) as the solvent. When a dip-molded article has an MEK-insoluble content of 1% by weight or less and an elastomer contained in a synthetic latex composition has an MEK-insoluble content of 60% by weight, it can be presumed that about 60% by weight of crosslinked structures are introduced in the production process of the dip-molded article. The MEK-insoluble content serves as an index for determining the degree of the formation of crosslinked structures in a polymer structure.

In order to improve the stress retention rate of a dip-molded article in which a carboxyl group-containing nitrile rubber elastomer is used, it is effective to increase the amount of crosslinked structures contained in the dip-molded article. This is because, in a dip-molded article having an increased amount of crosslinked structures, the molecular chains are strongly entangled with each other, and this makes the molecular chains unlikely to be disentangled when stretched and the original molecular structure is thus restored, as a result of which so-called rubber elasticity is enhanced and the stress retention rate is improved.

A synthetic latex composition is usually obtained by mixing latex particles and water. The latex particles are usually covered with a surfactant, and they are in the form of being arranged in layers when the composition is eventually dehydrated to form a film. In the present specification, the term "interparticle" is used for gaps between the latex particles arranged in layers while the inside of each particle is referred to as "intraparticle", and these terms are distinguished from one another. As compared to a natural rubber latex composition, a synthetic latex composition has a problem in that the interparticle bonds are weak. The present inventors discovered that an elastomer having a large amount of crosslinked structures can be further crosslinked using a crosslinking agent suitable for intraparticle crosslinking when a large amount of carboxyl groups are incorporated into the particles of the elastomer, whereby the crosslink density can be increased and the stress retention rate can be further improved in the resulting molded article. Meanwhile, the weakness of interparticle bonds, which is common to synthetic latex compositions, is conventionally complemented by a metal crosslinking agent such as zinc. As for the elastomer according to the present embodiment, the above-described problem can be resolved by crosslinks formed by the epoxy crosslinking agent in particular that is capable of partially crosslinking between particles as well. In addition, interparticle crosslinks can be further increased by further adding a metal crosslinking agent such as zinc. This elastomer is highly pH-dependent since a large amount of carboxyl groups exist in its particles. In other words, the properties of the resulting molded article are modified based on whether the carboxyl groups, which serve as crosslinking points of the crosslinking agents, exist at the interfaces or the inside of the particles of the elastomer. Usually, the pH of the latex composition is adjusted to be about 8.3, and the elastomer thus contains a large amount of carboxyl groups inside its particles. Accordingly, the carboxyl groups remain inside the particles when the pH of the dip molding composition is eventually adjusted to be lower than 9.5; therefore, the stress retention rate is increased, and the tensile strength is reduced due to a condition where the amount of carboxyl groups is small at the particle interfaces. Meanwhile, when the pH of the dip molding composition is higher than 10.5, the opposite happens since a large amount of the carboxyl groups inside

the particles move to the particle interfaces. Therefore, in the present invention, it is desired to adjust the pH of the dip molding composition to be 9.5 or higher, 10.5 or lower using a pH modifier.

<Formulation of Carboxyl Group-Containing Nitrile Rubber Elastomer>

The formulation of the carboxyl group-containing nitrile rubber elastomer contains a conjugated diene monomer-derived structural unit, an ethylenically unsaturated carboxylic acid monomer-derived structural unit, and an ethylenically unsaturated nitrile monomer-derived structural unit as indispensable structural units, and may optionally further contain other copolymerizable monomer-derived structural unit.

The formulation of the elastomer is characterized in that, for improvement of the flexibility of a dip-molded article, the content ratio of the ethylenically unsaturated carboxylic acid monomer-derived structural unit in the carboxyl group-containing nitrile rubber elastomer is lower than in an ordinary elastomer. Further, when a large number of carboxyl groups bind with calcium ions derived from a coagulant, the molecular chains are easily broken by a physical external force, and structural variation is likely to occur due to rebinding of the calcium ions with different carboxyl groups. Therefore, entangled structures of the rubber molecular chains are modified and do not return back to an original state, as a result of which the stress retention rate of a dip-molded article is reduced.

The monomers will now be described.

<Conjugated Diene Monomer>

The conjugated diene monomer used in the present embodiment is not particularly restricted as long as it is radically polymerizable. Specific examples of the conjugated diene monomer include 1,3-butadiene, isoprene, 2,3-dimethyl-1,3-butadiene, 2-ethyl-1,3-butadiene, 1,3-pentadiene, and chloroprene. Any of these conjugated diene monomers may be used singly, or two or more thereof may be used in combination. The conjugated diene monomer-derived structural unit is an element that mainly imparts flexibility to a molded article. The content of the conjugated diene monomer is usually 50% by weight or more, 78% by weight or less, preferably 60% by weight or more, 75% by weight or less, with respect to all monomers.

<Ethylenically Unsaturated Nitrile Monomer>

The ethylenically unsaturated nitrile monomer used in the present embodiment may be any monomer that contains a combination of a polymerizable unsaturated bond and a nitrile group in one molecule, and examples of such a monomer include acrylonitrile, methacrylonitrile, fumaronitrile, $\alpha$-chloroacrylonitrile, and $\alpha$-cyanoethylacrylonitrile. Thereamong, acrylonitrile and methacrylonitrile are preferred, and acrylonitrile is more preferred. The ethylenically unsaturated nitrile monomer-derived structural unit is a component that mainly imparts strength to a molded article, and an excessively small amount thereof leads to insufficient strength, whereas an excessively large amount thereof improves the chemical resistance but makes the molded article overly hard. The content of the ethylenically unsaturated nitrile monomer in all monomers is 20% by weight or more, 30% by weight or less, preferably 21% by weight or more, 28% by weight or less. An increase in the amount of the ethylenically unsaturated nitrile monomer is relatively unlikely to increase the modulus and has substantially no effect on the stress retention rate; therefore, the amount of the ethylenically unsaturated nitrile monomer can be set as appropriate within the above-described range in accordance with the intended use in terms of chemical resistance, film thickness and the like.

<Ethylenically Unsaturated Carboxylic Acid Monomer>

The ethylenically unsaturated carboxylic acid monomer-derived structural unit serves as a crosslinking point with a crosslinking agent. The type of the ethylenically unsaturated carboxylic acid monomer is not particularly restricted, and the ethylenically unsaturated carboxylic acid monomer may be a monocarboxylic acid or a polycarboxylic acid. Specific examples thereof include acrylic acid, methacrylic acid, itaconic acid, maleic acid, fumaric acid, maleic anhydride, and citraconic anhydride, among which acrylic acid and methacrylic acid are preferred. Any of these ethylenically unsaturated carboxylic acid monomers may be used singly, or two or more thereof may be used in any combination at any ratio. The content ratio of the ethylenically unsaturated carboxylic acid monomer-derived structural unit in the elastomer is 3.5% by weight or more, 6% by weight or less, preferably 3.5% by weight or more, 5.0% by weight or less, more preferably 3.5% by weight or more, 4.5% by weight or less. An increase in the amount of the ethylenically unsaturated carboxylic acid monomer causes a large increase in the modulus; therefore, it is preferred to reduce the amount of the ethylenically unsaturated carboxylic acid monomer as much as possible such that the above-described range is achieved.

<Other Copolymerizable Monomer>

In the present embodiment, other monomer that is copolymerizable with the conjugated diene monomer, the ethylenically unsaturated nitrile monomer and the ethylenically unsaturated carboxylic acid monomer can be used as required. This other copolymerizable monomer may be any monomer that contains a polymerizable unsaturated bond in the molecule, and examples thereof include: ethylenically unsaturated sulfonic acid monomers, such as acrylamidepropanesulfonic acid and styrenesulfonic acid; ethylenically unsaturated carboxylic acid ester monomers, such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, monoethyl itaconate, monobutyl fumarate, monobutyl maleate, dibutyl maleate, dibutyl fumarate, ethyl maleate, mono-2-hydroxypropyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth) acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, dimethylaminoethyl (meth)acrylate, 2-sulfoethyl acrylate, and 2-sulfopropyl methacrylate; vinyl aromatic monomers, such as styrene, alkyl styrene, and vinyl naphthalate; fluoroalkyl vinyl ethers, such as fluoroethyl vinyl ether; vinylpyridine; and non-conjugated diene monomers, such as vinyl norbornene, dicyclopentadiene, and 1,4-hexadiene. The content of the other copolymerizable monomer is usually 0% by weight or more, 5% by weight or less, preferably 0% by weight or more, 3% by weight or less, with respect to all monomers. It is noted here that "0% by weight" means that the above-described monomer is not contained (or below a detection limit), and the present embodiment may take such a mode.

<Method of Producing Synthetic Latex Composition>

A method of producing a synthetic latex composition will now be described mainly taking a synthetic latex composition of a carboxyl group-containing acrylonitrile-butadiene rubber (XNBR) as an example; however, the mode of the carboxyl group-containing nitrile rubber elastomer of the present embodiment is not limited to this elastomer.

The method of producing a synthetic latex composition according to the present embodiment can be carried out based on an ordinary polymerization method, and a polymerization reactor may take any of a batchwise mode, a semi-batchwise mode, and a continuous mode. Examples of a method of adding monomers include: a method of adding the monomers to the polymerization reactor all at once; a method of continuously or intermittently adding the monomers in accordance with the progress of polymerization reaction; and a method of adding a portion of the monomers and allowing the added monomers to react until a specific conversion rate is obtained, followed by continuous or intermittent addition of the remaining monomers, and any of these methods may be employed. Further, the monomers to be added may be mixed in advance before use, or the monomers may be used separately. When the monomers are mixed, the mixing ratio may be constant or variable.

Characteristic features of a method for producing a synthetic latex composition containing an elastomer that has an MEK-insoluble content of 60% by mass or more and has flexible basic properties will now be described.

A molded article produced using the synthetic latex composition of the present embodiment that is obtained by the below-described production method can be provided with high rubber elasticity in terms of stress retention rate and flexibility as basic physical properties, as compared to a molded article produced using a conventional linear XNBR polymerized at a low temperature.

A synthetic latex composition that contains an elastomer having an MEK-insoluble content of 60% by weight or more can be produced by, for example, a method in which a polymerization reaction is performed at the below-described relatively high polymerization temperature using a relatively small amount of a chain transfer agent until a specific polymerization conversion rate is obtained, and the polymerization temperature is subsequently further increased.

The polymerization temperature for performing the polymerization reaction is set relatively high at 20°C or higher, 60°C or lower, preferably 25°C or higher, 50°C or lower, so as to reduce the molecular weight of the elastomer in the synthetic latex composition, increase the amount of branched chains, and thereby increase the MEK-insoluble content.

The amount of a polymerization initiator is set relatively large so as to reduce the molecular weight of the elastomer in the synthetic latex composition, increase the amount of branched chains, and thereby increase the MEK-insoluble content.

The amount of the chain transfer agent is set as small as possible at 0.2% by weight or more, 0.8% by weight or less so as to increase the amount of branched chains and thereby increase the MEK-insoluble content.

It is noted here that, although the present embodiment is characterized in that the MEK-insoluble content is 60% by weight or more, 80% by weight or less, the MEK-insoluble content is preferably 65% by weight ore more, 75% by weight or less, more preferably 68% by weight or more, 72% by weight or less.

When the MEK-insoluble content is more than 80% by weight, the film forming properties are deteriorated and a uniform film is unlikely to be formed, making it difficult to perform dip molding.

Next, in order to produce a molded article having a soft texture, it is necessary to control the elastomer in the

synthetic latex composition to have an MEK-insoluble content of 60% by weight or more and, at the same time, control the resulting cast film to have a low MEK swelling rate.

The MEK swelling rate is 100 times or higher when the MEK-insoluble content is 0% by weight or more, 10% by weight or less; the MEK swelling rate is 30 times or higher, 70 times or lower when the MEK-insoluble content is 30% by weight; and the MEK swelling rate is 5 times or higher, 25 times or lower when the MEK-insoluble content is 60% by weight or more, and the MEK swelling rate is set in a range of 5 times or higher, 10 times or lower so that a particularly soft texture is obtained. The MEK swelling rate and the MEK-insoluble content can be determined by the method described below in the section of Examples.

Once the polymerization conversion rate of the elastomer contained in the synthetic latex composition reached a prescribed value, the polymerization reaction is terminated by cooling the polymerization system or adding a polymerization terminator. The polymerization conversion rate at which the polymerization reaction is terminated is usually 80% or higher, preferably 90% or higher, more preferably 93% or higher.

Additives used in the polymerization reaction will now be described.

<Emulsifier>

An emulsifier is not particularly restricted; however, it is preferably one that is usually used in emulsion polymerization, and examples thereof include: nonionic emulsifiers, such as polyoxyethylene alkyl ethers, polyoxyethylene alkylphenol ethers, polyoxyethylene alkyl esters, and polyoxyethylene sorbitan alkyl esters; anionic emulsifiers, such as fatty acids (e.g., myristic acid, palmitic acid, oleic acid, and linolenic acid) and salts thereof, phosphoric acid esters (e.g., isopropyl phosphate and polyoxyethylene alkyl ether phosphate), alkyl diphenyl ether disulfonates, disodium lauryldiphenyl oxysulfonate, alkyl naphthalenesulfonates, sodium salts of naphthalenesulfonic acid-formalin condensates, sodium dialkylsulfosuccinates, alkyl benzene sulfonates, alkylallyl sulfonates, higher alcohol sulfates, and alkyl sulfosuccinates; cationic emulsifiers, such as ammonium chlorides (e.g., trimethyl ammonium chloride and dialkyl ammonium chloride), benzylammonium salts, and quaternary ammonium salts; and double bond-containing copolymerizable emulsifiers, such as sulfoesters of $\alpha,\beta$-unsaturated carboxylic acids, sulfate esters of $\alpha,\beta$-unsaturated carboxylic acids, and sulfoalkyl aryl ethers. The amount of an emulsifier to be used is not particularly restricted; however, it is 0.1 parts by weight or more, 10 parts by weight or less, preferably 0.5 parts by weight or more, 6.0 parts by weight or less, with respect to 100 parts by weight of a monomer mixture. Any of the above-described emulsifiers may be used singly, or two or more thereof may be used in combination. Further, in the production of the synthetic latex composition, an emulsifier may be used all at once, or may be used in portions.

<Chain Transfer Agent>

Examples of the chain transfer agent include: mercaptans, such as *t*-dodecylmercaptan, n-dodecylmercaptan, and mercaptoethanol; halogenated hydrocarbons, such as carbon tetrachloride, methylene chloride, and methylene bromide; and $\alpha$-methylstyrene dimer, among which mercaptans such as *t*-dodecylmercaptan and *n*-dodecylmercaptan are preferred. The chain transfer agent may be used all at once at the start of the polymerization reaction, or may be used as needed in accordance with the progress of the polymerization reaction. The chain transfer agent may also be used both at start of the polymerization reaction and during the progress of the polymerization reaction. In the present embodiment, usually, a synthetic latex composition that contains an elastomer having a large number of branches in its rubber molecular chain and a high MEK-insoluble content can be obtained by reducing the amount of the chain transfer agent as much as possible.

<Aqueous Solvent>

Usually, water is used as an aqueous solvent, and the amount thereof is usually 70 parts by weight or more, 250 parts by weight or less, preferably 80 parts by weight or more, 170 parts by weight or less, with respect to 100 parts by weight of the monomer mixture. When the amount of the aqueous solvent is less than 70 parts by weight, the stability in the polymerization step may be reduced. Meanwhile, when the amount of the aqueous solvent is greater than 250 parts by weight, a longer time and a greater amount of energy are required for a post-process treatment of the resulting synthetic latex composition, causing a problem that the production process of the synthetic latex composition is no longer efficient.

<Polymerization Initiator>

A polymerization initiator is not particularly restricted, and examples thereof include potassium persulfate, ammonium persulfate, sodium persulfate, superphosphates, hydrogen peroxide, *t*-butyl hydroperoxide, 1,1,3,3-tetramethylbutyl hydroperoxide, *p*-menthane hydroperoxide, 2,5-dimethylhexan-2,5-dihydroperoxide, diisopropylbenzene

hydroperoxide, cumene hydroperoxide, di-t-butyl peroxide, di-$\alpha$-cumyl peroxide, acetyl peroxide, isobutyryl peroxide, benzoyl peroxide, and azobis-isobutyronitrile. Any of these polymerization initiators may be used singly, or two or more thereof may be used in combination. The amount of a polymerization initiator to be used is usually 0.001 parts by weight or more, 10 parts by weight or less, preferably 0.01 parts by weight or more, 5 parts by weight or less, more preferably 0.01 parts by weight or more, 2 parts by weight or less, with respect to 100 parts by weight of the monomer mixture.

Further, a peroxide initiator can be used as a redox-type polymerization initiator in combination with a reducing agent. The reducing agent is not particularly restricted, and examples thereof include: compounds containing a metal ion in a reduced state, such as ferrous sulfate and cuprous naphthenate; sulfonates, such as sodium methanesulfonate; formaldehyde sulfoxylates, such as sodium formaldehyde sulfoxylate; 2-hydroxy-2-sulfonatoacetates, such as disodium 2-hydroxy-2-sulfonatoacetate; 2-hydroxy-2-sulfinatoacetates, such as disodium 2-hydroxy-2-sulfinatoacetate; amines, such as formdimethyl aniline; and ascorbic acid. Any of these reducing agents may be used singly, or two or more thereof may be used in combination. The amount of a reducing agent to be used is not particularly restricted; however, it is, in terms of weight ratio with respect to a peroxide (peroxide/reducing agent), 0.01 or higher, 100 or lower, preferably 0.1 or higher, 50 or lower.

<Polymerization Terminator>

A polymerization terminator is not particularly restricted, and examples thereof include: nitrites, such as sodium nitride, potassium nitrite, and ammonium nitrite; ascorbic acid; citric acid; hydroxylamine; hydroxylamine sulfate; diethylhydroxylamine; hydroxylamine sulfonic acid and alkali metal salts thereof; 2,2,6,6-tetramethylpiperidinooxyl compounds, such as 4-benzoyloxy-2,2,6,6-tetramethylpiperidinooxyl; sodium dimethyldithiocarbamate; dimethyldithiocarbamates; hydroquinone derivatives; catechol derivatives; resorcinol derivatives; and aromatic hydroxydithiocarboxylic acids, such as hydroxydimethylbenzene dithiocarboxylic acid, hydroxydiethylbenzene dithiocarboxylic acid and hydroxydibutylbenzene dithiocarboxylic acid, and alkali metal salts thereof. A polymerization terminator may be added after or simultaneously with addition of an aqueous inorganic base solution, such as an aqueous sodium hydroxide solution, an aqueous potassium hydroxide solution, or aqueous ammonia. The amount of the polymerization terminator to be used is usually 0.01 parts by weight or more, 5 parts by weight or less, preferably 0.03 parts by weight or more, 2 parts by weight or less, with respect to 100 parts by weight of the monomer mixture.

After the termination of the polymerization reaction, as required, for example, unreacted monomers are removed, the solid concentration and the pH are adjusted, and a surfactant, an anti-aging agent, a preservative, an antibacterial agent and the like are added, whereby a desired latex is produced. It is noted here that, in the method of producing a latex according to the present invention, polymerization auxiliary materials such as a deoxidant, a dispersant, a surfactant, a chelating agent, a molecular weight modifier, a particle size modifier, an anti-aging agent, and a preservative can be added as required. These polymerization auxiliary components may each be an organic compound or an inorganic compound.

<Evaluation of Crosslinked Structures of Carboxyl Group-Containing Nitrile Rubber Elastomer>

There are various methods for evaluating the degree of crosslinked structures of the carboxyl group-containing nitrile rubber elastomer; however, as an evaluation method that is easy and has good reproducibility, a method of measuring and presuming the amount of components insoluble in a parent solvent of a polymer may be employed. When the polymer is an XNBR, the degree of crosslinked structures can be evaluated by measuring the amount of components insoluble in methyl ethyl ketone (MEK). Usually, the MEK-insoluble content is affected by, for example, an increase in the amount of crosslinked structures between primary polymer chains that are generated by emulsion polymerization, and the amount of side-chain polymers growing from the primary polymer chains.

A detailed method of measuring the MEK-insoluble content will be described below in the section of Examples.

(2) Epoxy Crosslinking Agent

An object of the present invention is to produce a flexible molded article having a high stress retention rate. In order to achieve this, the above-described elastomer has an MEK-insoluble content of 60% by weight or more, and crosslinked structures are introduced into its particles to allow a large number of carboxyl groups to exist in the particles. In this respect, it is necessary to select a crosslinking agent that is suitable for improving the crosslink density and increasing the stress retention rate by allowing a large amount of the crosslinking agent to penetrate into latex particles, crosslink with carboxyl groups in the latex particles, and thereby enhance intraparticle crosslinking. On the other hand, the present inventors focused on that, when an epoxy crosslinking agent is used as the crosslinking agent, a portion thereof can penetrate into many latex particles to form intraparticle crosslinks with carboxyl groups in the particles. The dip molding composition is composed of water and latex particles, and the latex particles are each constituted by a hydrophilic region and a lipophilic region (hydrophobic region).

The inside of these latex particles are similar to methyl isobutyl ketone (MIBK); therefore, the present inventors measured the MIBK/water distribution ratio of the epoxy crosslinking agent. This measurement was performed to examine the ratio of the epoxy crosslinking agent that dissolves in water and MIBK in a mixture thereof, and it was believed that the higher the ratio of the epoxy crosslinking agent dissolving in MIBK, the larger the amount of the epoxy crosslinking agent penetrating into the latex particles and thus the greater the contribution of the epoxy crosslinking agent to intraparticle crosslinking.

Meanwhile, since an epoxy crosslinking agent is deactivated by hydrolysis in a hydrophilic region under an alkaline environment, the present inventors have been using the MIBK/water distribution ratio of an epoxy crosslinking agent as a reference for selecting an epoxy crosslinking agent having a longer pot life. As a result, it has been found that: an epoxy crosslinking agent which has an MIBK/water distribution ratio of 27% or higher and contains an epoxy compound having three or more glycidyl ether groups in one molecule and a basic skeleton containing an alicyclic, aliphatic or aromatic hydrocarbon, i.e., a tri- or higher-valent epoxy compound hardly soluble in water, can provide a pot life of about 3 days, which is minimum required for glove production; and a pot life of about 5 days can be obtained when the MIBK/water distribution ratio is 50% or higher while a pot life of 7 days or longer can be obtained when the MIBK/water distribution ratio is 70% or higher.

In the present embodiment, an epoxy crosslinking agent having an MIBK/water distribution ratio of 50% or higher is used in consideration of allowing a large amount of the epoxy crosslinking agent to penetrate into particles. Further, in covalently-bound crosslinked structures formed by the epoxy crosslinking agent, bonds are different from an ionic bond formed by zinc in that they are unlikely to be broken; therefore, such crosslinked structures are advantageous in that they do not impair the flexibility inherent to the above-described latex.

These features of the epoxy crosslinking agent will now be described one by one.

a. Epoxy Crosslinking Agent Containing Epoxy Compound That Contains Three or More Glycidyl Ether Groups in One Molecule and Has Basic Skeleton Containing Alicyclic, Aliphatic or Aromatic Hydrocarbon

<Epoxy Compound That Contains Three or More Glycidyl Ether Groups in One Molecule and Has Basic Skeleton Containing Alicyclic, Aliphatic or Aromatic Hydrocarbon>

The epoxy compound is a compound which usually has three or more glycidyl ether groups and a basic skeleton containing an alicyclic, aliphatic or aromatic hydrocarbon (this compound is hereinafter also referred to as "tri- or higher-valent epoxy compound"). An epoxy compound having three or more glycidyl ether groups can be usually produced by allowing an epihalohydrin and an alcohol having three or more hydroxy groups in one molecule to react with each other.

Examples of the alcohol having three or more hydroxy groups that constitutes the basic skeleton of the tri- or higher-valent epoxy compound include aliphatic glycerol, diglycerol, triglycerol, polyglycerol, sorbitol, sorbitan, xylitol, erythritol, trimethylolpropane, trimethylolethane, pentaerythritol, aromatic cresol novolac, and trishydroxyphenylmethane.

Among tri- or higher-valent epoxy compounds, it is preferred to use a polyglycidyl ether.

Specifically, it is preferred to use an epoxy crosslinking agent that contains at least one selected from glycerol triglycidyl ether, trimethylolpropane triglycidyl ether, sorbitol triglycidyl ether, sorbitol tetraglycidyl ether, pentaerythritol triglycidyl ether and pentaerythritol tetraglycidyl ether, and it is more preferred to use an epoxy crosslinking agent that contains at least one selected from trimethylolpropane triglycidyl ether, triethylolpropane triglycidyl ether, pentaerythritol triglycidyl ether, and pentaerythritol tetraglycidyl ether.

<Regarding Epoxy Crosslinking Agent Containing Tri- or Higher-Valent Epoxy Compound>

Among epoxy crosslinking agents, those containing an epoxy compound having a glycidyl ether group can be generally produced by allowing a hydroxy group of an alcohol to react with an epihalohydrin as follows. It is noted here that, in the following (I), for the sake of simplicity of the description, a monohydric alcohol is used as the alcohol.

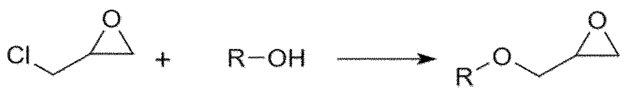

(I)

The epoxy compound contained in the epoxy crosslinking agent may be divalent to about heptavalent depending on the number of hydroxy groups of the alcohol used as a raw material. However, for example, even in the synthesis of a trivalent epoxy compound as a target compound, several kinds of compounds are generated due to side reactions in the reaction process, and a divalent epoxy compound is usually included therein.

Therefore, for example, a trivalent epoxy crosslinking agent is generally obtained as a mixture of divalent and

trivalent epoxy compounds. Even in those crosslinking agents that are usually referred to as "trivalent epoxy crosslinking agents", the content ratio of a trivalent epoxy compound, which is a main component, is said to be about 50%.

In addition, some epoxy crosslinking agents are hardly soluble in water, and this is largely attributed to the effects of chlorine and the like that are contained in the structures of epoxy compounds.

The epoxy crosslinking agent is preferably one which contains a tri- or higher-valent epoxy compound obtained by a reaction between an epihalohydrin and an alcohol having three or more hydroxy groups.

As the epihalohydrin, at least one selected from epichlorohydrin, epibromohydrin, and epiiodohydrin may be used. Thereamong, it is preferred to use epichlorohydrin. Further, a tri- or higher-valent epoxy crosslinking agent and a divalent epoxy crosslinking agent can be used in combination as a mixture. Alternatively, in the production of a tri- or higher-valent epoxy crosslinking agent, an alcohol having three or more hydroxy groups and an alcohol having two hydroxy groups can be mixed and allowed to react with each other.

<Crosslinking Reaction Between Epoxy Compound and Carboxyl Group of XNBR>

A crosslinking reaction between an epoxy compound and a carboxyl group of an XNBR takes place as illustrated in the following Formula (II). It is noted here that, from the standpoint of simplicity of the description, a monovalent epoxy compound is used in the following (II).

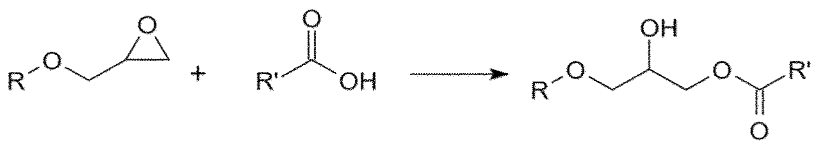

(II)

The epoxy compound forms a crosslink with a carboxyl group contained in the XNBR and, as an optimum condition for the formation of the crosslink with the epoxy compound, for example, the epoxy compound is heated in the curing step at 120°C or higher to cause a ring-opening reaction of its epoxy group.

<Epoxy Crosslinking Agent Having MIBK/Water Distribution Ratio of 50% or Higher>

The epoxy crosslinking agent is required to have an MIBK/water distribution ratio of 50% or higher. The MIBK/water distribution ratio is more preferably 70% or higher. The MIBK/water distribution ratio correlates with the pot life of a tri- or higher-valent epoxy crosslinking agent, and the pot life is 5 days when the MIBK/water distribution ratio is 50% or higher while the pot life is 7 days or longer when the MIBK/water distribution ratio is 70% or higher; therefore, an MIBK/water distribution ratio of 50% or higher was judged to be preferred and adopted. An upper limit of the MIBK/water distribution ratio does not need to be set particularly, and it may be 100% or lower.

The dip molding composition is divided into a hydrophobic region of latex particles and a hydrophilic region of a solvent and, among epoxy crosslinking agents, it is preferred to use one which is hardly soluble in water and readily penetrates into the latex particles constituting the hydrophobic region of the elastomer.

Further, it is believed that much of the epoxy crosslinking agent exists inside the latex particles in the dip molding composition and thereby reacts with carboxyl groups contained in the latex particles to crosslink the elastomer, as a result of which the crosslink density and the stress retention rate of the resulting molded article can be improved.

The MIBK/water distribution ratio can be determined as follows.

First, about 5.0 g of water, about 5.0 g of MIBK, and about 0.5 g of the epoxy crosslinking agent are precisely weighed and added to a test tube. The weight of MIBK and that of the epoxy crosslinking agent are defined as M (g) and E (g), respectively.

This mixture is thoroughly mixed with stirring for 3 minutes at a temperature of 23°C $\pm$ 2°C and subsequently separated into an aqueous layer and an MIBK layer by 10-minute centrifugation at $1.0 \times 10^3$ G. Thereafter, the weight of the MIBK layer is measured and defined as ML (g).

$$\text{MIBK/water distribution ratio (\%)} = (\text{ML (g)} - \text{M (g)})/\text{E (g)} \times 100$$

The above-described measurement is performed three times, and an average value thereof is defined as the MIBK/water distribution ratio.

b. Preferred Properties of Epoxy Crosslinking Agent

<Average Number of Epoxy Groups>

As described above, even a tri- or higher-valent epoxy crosslinking agent contains a divalent epoxy compound via a side reaction; therefore, in the evaluation of products, it is important to know the average number of epoxy groups and thereby understand the ratio of a trivalent epoxy group-containing compound.

The average number of epoxy groups can be determined by: identifying epoxy compounds contained in the epoxy crosslinking agent by gel permeation chromatography (GPC); calculating the number of epoxy groups for each of the epoxy compounds by multiplying the number of epoxy groups in one molecule of each epoxy compound by the number of moles of the epoxy compound; and dividing a total value of the numbers of epoxy groups by a total number of moles of all epoxy compounds contained in the epoxy crosslinking agent.

The epoxy crosslinking agent used in the present embodiment preferably has an average number of epoxy groups of greater than 2.0 and, from the standpoint of obtaining a molded article having favorable physical properties, the average number of epoxy groups is more preferably 2.3 or greater, still more preferably 2.5 or greater. Meanwhile, an upper limit of the average number of epoxy groups may be, for example, 7 or less, or 4 or less.

<Epoxy Equivalent>

From the standpoint of obtaining a molded article having favorable stress retention rate and fatigue durability, the epoxy equivalent of the epoxy compound is preferably not less than 100 g/eq, but preferably 230 g/eq or less, more preferably 200 g/eq or less.

The epoxy equivalent of the epoxy compound, which is a value obtained by dividing the average molecular weight of the epoxy compound by the average number of epoxy groups, indicates an average weight per epoxy group. This value can be measured by a perchloric acid method.

<Molecular Weight>

From the standpoint of the dispersibility in water, the epoxy compound contained in the epoxy crosslinking agent has a molecular weight of preferably 150 or higher, 1,500 or lower, more preferably 175 or higher, 1,400 or lower, still more preferably 200 or higher, 1,300 or lower.

c. Amount of Epoxy Crosslinking Agent to be Added

The amount of the epoxy crosslinking agent to be added is usually not less than 0.2 parts by weight, preferably not less than 0.3 parts by weight, more preferably not less than 0.5 parts by weight, but usually 2.5 parts by weight or less, preferably 2.0 parts by weight or less, more preferably 1.5 parts by weight or less, with respect to 100 parts by weight of the elastomer. When the amount of the epoxy crosslinking agent is excessively small, the stress retention rate is reduced; however, when the epoxy crosslinking agent is added in an amount of greater than 2.5 parts by weight, for example, 3 parts by weight, the tensile strength and the elongation rate are reduced.

(3) Dispersant of Epoxy Crosslinking Agent

The epoxy compound is required to be maintained in a uniformly dispersed state in the dip molding composition. Meanwhile, an epoxy crosslinking agent having an MIBK/water distribution ratio of 50% or higher has a problem in that the higher the MIBK/water distribution ratio, the harder it is to add the crosslinking agent to a latex and the less likely is the crosslinking agent to be dispersed in the latex.

A highly hydrophilic epoxy compound has no problem in terms of dispersibility in water; however, for an epoxy compound used in a solvent-based paint, the present inventors considered dissolving the epoxy crosslinking agent using a dispersant before incorporating it into an elastomer.

Particularly, turbidity tends to be observed when an epoxy crosslinking agent having an MIBK/water distribution ratio of 50% or higher is dissolved in water; therefore, it was considered necessary to disperse such an epoxy crosslinking agent using a dispersant. Moreover, such dispersion with a dispersant is required in the actual mass-production.

The dispersant of the above-described epoxy crosslinking agent (compound) is preferably at least one selected from the group consisting of monohydric lower alcohols, glycols represented by the following Formula (E1), ethers represented by the following Formula (E2), and esters represented by the following Formula (E3):

$$HO\text{-}(CH_2CHR^{1'}\text{-}O)_{n1}\text{-}H \qquad (E1)$$

(wherein, $R^{1'}$ represents a hydrogen atom or a methyl group; and n1 represents an integer of 1 to 3)

$$R^{2'}O\text{-}(CH_2CHR^{1'}\text{-}O)_{n2}\text{-}R^{3'} \quad (E2)$$

(wherein, $R^{1'}$ represents a hydrogen atom or a methyl group; $R^{2'}$ represents an aliphatic hydrocarbon group having 1 to 5 carbon atoms; $R^{3'}$ represents a hydrogen atom or an aliphatic hydrocarbon group having 1 to 3 carbon atoms; and n2 represents an integer of 0 to 3)

$$R^{2'}O\text{-}(CH_2CHR^{1'}\text{-}O)_{n3}\text{-}(C{=}O)\text{-}CH_3 \quad (E3)$$

(wherein, $R^{1'}$ represents a hydrogen atom or a methyl group; $R^{2'}$ represents an aliphatic hydrocarbon group having 1 to 5 carbon atoms; and n3 represents an integer of 0 to 3).

Examples of the monohydric lower alcohols include methanol and ethanol.

Examples of the glycols represented by Formula (E1) include ethylene glycol, propylene glycol, diethylene glycol, dipropylene glycol, and tripropylene glycol.

Among the ethers represented by Formula (E2), examples of glycol ethers include diethylene glycol monomethyl ether, diethylene glycol monoisopropyl ether, diethylene glycol monobutyl ether, diethylene glycol monoisobutyl ether, triethylene glycol monomethyl ether, triethylene glycol monobutyl ether, tripropylene glycol monomethyl ether, and triethylene glycol dimethyl ether. As an ether represented by Formula (E2), an ether wherein n2 is 0 can be used as well.

Examples of the esters represented by Formula (E3) include diethylene glycol monoethyl ether acetate and diethylene glycol monobutyl ether acetate.

When the above-described dispersants of the epoxy compound are used, any one of them may be used singly, or two or more thereof may be used in combination. The dispersant(s) is/are preferably used without being mixed with water in advance.

Among the above-described dispersants, alcohols are preferred and, particularly, it is preferred to use methanol, ethanol, or diethylene glycol. From the standpoints of volatility and flammability, it is particularly preferred to use diethylene glycol.

Diethylene glycol is presumed to be preferred since it has highly hydrophilic glycol groups and an ether structure and contains a hydrophobic hydrocarbon structure at the same time, and is thus readily soluble in both water and the elastomer.

In the dip molding composition, the weight ratio of the epoxy crosslinking agent containing the epoxy compound and the dispersant is preferably 1:4 to 1:1.

When an epoxy compound having a high MIBK/water distribution ratio is used for the preparation of the dip molding composition, it is preferred to dissolve the epoxy compound in its dispersant in advance and then mix the resulting dispersion with other constituents of the dip molding composition.

(4) Metal Crosslinking Agent

In the present embodiment, a metal crosslinking agent may be further incorporated as a crosslinking agent. From the standpoint of improving the film forming properties, a metal crosslinking agent can be added in addition to the above-described epoxy crosslinking agent, and it is effective to add a small amount of, for example, a zinc compound. A zinc compound forms interparticle crosslinks through ionic crosslinking and is expected to not only maintain the tensile strength of a molded article and inhibit swelling of the molded article in an artificial sweat solution and a reduction in the tensile strength, but also improve the organic solvent impermeability; however, it has a negative effect on the improvement of the stress retention rate and the flexibility, which is a problem to be addressed by the present invention. Nevertheless, in order to improve the film forming properties of the molded article, it is beneficial to add a zinc compound in such an amount that does not allow the negative effect to be exerted.

Examples of the zinc compound include zinc oxide and zinc hydroxide, and zinc oxide is mainly used. The zinc oxide used in this embodiment of the present invention is not particularly restricted and, usually, any commonly used zinc oxide can be used.

When zinc oxide is incorporated into the dip molding composition of the present embodiment, the amount thereof to be added is 0.1 parts by weight or more, 1.0 part by weight or less, preferably 0.2 parts by weight or more, 0.7 parts by weight or less, more preferably 0.2 parts by weight or more, 0.6 parts by weight or less, with respect to 100 parts by weight of the elastomer contained in the dip molding composition.

(5) pH Modifier

The concept of pH adjustment in conventional XNBR dip molding compositions is usually to increase a latex pH of about 8.3 to a range of 10 or higher, 11 or lower or so in order to orient carboxyl groups, which are oriented on the inside at

the latex particle interfaces, to the outside in the form of carboxylate ions ($COO^-$). By this, zinc ions of a metal crosslinking agent and calcium ions can be crosslinked together with an organic crosslinking agent forming interparticle crosslinks. In the resulting molded article, the tensile strength and the fatigue durability are improved, and interparticle crosslinks are formed to mitigate the drawback of a synthetic rubber latex. Further, as the latex particles themselves, those which are linear and contain as little crosslinked structure as possible with an MEK-insoluble content of 0% by weight or more, about 30% by weight or less are used in many cases, and these latex particles are produced such that a large number of carboxyl groups exist at the particle interfaces. In this sense, it has been believed that a high pH of, for example, 10.5 is more preferred; however, a pH of 11 or higher makes the resulting film hard, and this value has thus been considered as a limit.

In the present embodiment where an object is to improve the stress retention rate by keeping as many carboxyl groups as possible inside latex particles and thereby enhancing intraparticle crosslinking using an epoxy crosslinking agent penetrating into the particles, however, a pH of higher than, for example, 10.5 causes carboxyl groups to be oriented on the outside at the particle interfaces, and reduces the stress retention rate. In addition, since the epoxy crosslinking agent partially contributes to interparticle crosslinking as well, when the pH is lower than 9.5, although the stress retention rate is improved, the strength is reduced. In this sense, pH adjustment is important in the present embodiment, and the pH is adjusted to be, for example, preferably 9.5 or higher, 10.5 or lower, more preferably 10.0 or higher, 10.5 or lower, using a pH modifier. With regard to the pH adjustment, a lower pH leads to a higher stress retention rate and an increased elongation and flexibility. On the other hand, a higher pH leads to a higher tensile strength.

As the pH modifier, ammonia compounds, amine compounds, and alkali metal hydroxides can be used. Thereamong, it is preferred to use an alkali metal hydroxide since this makes it easier to adjust the production conditions such as pH and gelling conditions and, among alkali metal hydroxides, it is the most convenient to use potassium hydroxide (KOH). In the below-described Examples, KOH was mainly used as the pH modifier.

The amount of the pH modifier to be added is about 0.1 parts by weight or more, 3.0 parts by weight or less with respect to 100 parts by weight of the elastomer contained in the dip molding composition; however, industrially, the pH modifier is usually used in an amount of about 1.8 parts by weight or more, 2.0 parts by weight or less.

(6) Other Components

The dip molding composition contains the above-described components and water and, usually, may further contain other optional components.

The dip molding composition may further contain a dispersant. This dispersant is preferably an anionic surfactant, and examples thereof include carboxylates, sulfonates, phosphates, polyphosphates, high-molecular-weight alkyl aryl sulfonates, high-molecular-weight sulfonated naphthalenes, and high-molecular-weight naphthalene/formaldehyde condensation polymers, among which a sulfonate is preferably used.

As the dispersant, a commercially available product may be used as well. For example, "TAMOL NN9104" manufactured by BASF Japan Ltd. can be used. The amount thereof to be used is preferably about 0.5 parts by weight or more, 2.0 parts by weight or less with respect to 100 parts by weight of the elastomer contained in the dip molding composition.

The dip molding composition may further contain a variety of other additives. Examples of the additives include an antioxidant, a pigment, and a chelating agent. As the antioxidant, a hindered phenol-type antioxidant, such as WINGSTAY L, can be used. Further, as the pigment, for example, titanium dioxide can be used. As the chelating agent, for example, sodium ethylenediaminetetraacetate can be used.

The dip molding composition of the present embodiment can be prepared by mixing the elastomer and the epoxy crosslinking agent, usually along with the pH modifier, water and, as required, various additives such as a humectant, a dispersant, and an antioxidant, using a commonly used mixing means such as a mixer.

2. Method of Producing Molded Article

Another embodiment of the present invention is a molded article (dip-molded article) that is a cured product of the above-described dip molding composition. This molded article can be used as, for example, a glove for surgical, experimental, industrial or household use, a medical equipment such as a condom or a catheter, or a product such as a balloon, a nipple, or a fingerstall, and the molded article can be particularly preferably used as a glove. A method of producing a molded article will now be described for a case where the molded article is a glove.

A method of producing a molded article that is a cured product of the dip molding composition is not particularly restricted, and the method includes: the step of coagulating the dip molding composition to form a film on a mold or former for dip molding (glove forming mold); and the step of generating crosslinked structures in the elastomer. As a method of coagulating the dip molding composition to form a film, for example, any of a direct immersion method, a coagulation-immersion method, an electric immersion method, and a heat-sensitive immersion method may be employed and, thereamong, a direct immersion method and a coagulation-immersion method are preferred.

A method of producing a glove as a molded article will now be described in detail for a case where a coagulation-immersion method is employed as the method of coagulating the dip molding composition to form a film.

A glove can be produced by, for example, the following production method that includes:

(1) a coagulant adhesion step (a step of allowing a coagulant to adhere to a glove forming mold);
(2) a maturation step (a step of adjusting and stirring a dip molding composition);
(3) a dipping step (a step of immersing the glove forming mold in the dip molding composition);
(4) a gelling step (a step of gelling a film formed on the glove forming mold to prepare a cured film precursor);
(5) a leaching step (a step of removing impurities from the cured film precursor thus formed on the glove forming mold);
(6) a beading step (a step of making a roll in a cuff portion of the glove to be obtained);
(7) a curing step (a step of heating and drying the cured film precursor at a temperature required for crosslinking reaction),

which steps (3) to (7) are performed in the order mentioned.

The above-described production method may optionally include the following step (6') between the steps (6) and (7):
(6') the precuring step (the step of heating and drying the cured film precursor at a temperature lower than the temperature of the curing step).

The above-described production method may optionally further include the following step (7') after the step (7):
(7') the anti-blocking treatment step.

A method of performing an anti-blocking treatment is not particularly restricted, and examples thereof include: a chlorination method in which a treatment is performed by immersion in a mixed aqueous solution of sodium hypochlorite and hydrochloric acid, or using a chlorine gas chamber; a polymer coating method in which a polymer having an anti-blocking performance is applied onto a molded article; and a slurry method in which a molded article is immersed in an aqueous solution containing a lubricant component. Any of these method may be employed, and the anti-blocking treatment step may be performed after removing a dip-molded article from the glove forming mold.

The above-described production method also encompasses a method of producing a glove by so-called double-dipping, in which the steps (3) and (4) are repeated twice.

It is noted here that the term "cured film precursor" used herein refers to a film formed of an elastomer aggregated on a glove forming mold by a coagulant in the dipping step, which film has been gelled to a certain extent due to dispersion of calcium therein in the subsequent gelling step but has not been subjected to final curing.

The above-described steps will now each be described in detail.

(1) Coagulant Adhesion Step

(a) A glove forming mold is immersed in a coagulant solution that contains a coagulant and $Ca^{2+}$ ions as a gelling agent in an amount of usually 5% by weight or more, 40% by weight or less, preferably 8% by weight or more, 35% by weight or less.

In this process, the duration of allowing the coagulant and the like to adhere to the surface of the glove forming mold is set as appropriate, and it is usually 10 seconds or more, 20 seconds or less. Other inorganic salt having an effect of causing an elastomer to precipitate may be used as well. Particularly, it is preferred to use calcium nitrate. This coagulant is usually used in the form of an aqueous solution containing the coagulant in an amount of 5% by weight or more, 40% by weight or less.

Further, it is preferred that such a coagulant solution contain potassium stearate, calcium stearate, a mineral oil, an ester-based oil or the like as a mold release agent in an amount of 0.5% by weight or more, 2% by weight or less, for example, about 1% by weight.

The coagulant solution is not particularly restricted, and it is generally provided as a mixture of a coagulant component, a solvent, a surfactant, a humectant, an inorganic filler, a mold release agent, and the like. Examples of the coagulant component include: metal halides, such as barium chloride, calcium chloride, magnesium chloride, aluminum chloride, and zinc chloride; nitrates, such as barium nitrate, calcium nitrite, and zinc nitrate; acetates, such as barium acetate, calcium acetate, and zinc acetate; sulfates, such as calcium sulfate, magnesium sulfate, and aluminum sulfate; and acids, such as acetic acid, sulfuric acid, hydrochloric acid, and nitric acid. These compounds may be used singly or in combination and, thereamong, calcium nitrate and calcium chloride are more preferred.

The solvent is selected as required from, for example, water, alcohols, and acids.

The surfactant is used for the purposes of allowing the coagulant solution to uniformly adhere to the surface of the

glove forming mold and making it easy to remove the resulting film from the glove forming mold, and a nonionic surfactant, a metallic soap, or other compound is used as the surfactant.

As the metallic soap, calcium stearate, ammonium stearate, or zinc stearate is used and, as required, a metal oxide, calcium carbonate, talc, an inorganic filler or the like may be used.

(b) The glove forming mold to which the coagulant solution has adhered is placed in an oven having an internal temperature of 110°C or higher, 140°C or lower for 1 minute to 3 minutes so as to dry the coagulant solution and thereby allow the coagulant to adhere to the entirety or a part of the surface of the glove forming mold. In this process, it should be noted that the glove forming mold has a surface temperature of about 60°C after the drying, and this affects the subsequent reactions.

(c) Calcium not only functions as a coagulant for the formation of a film on the surface of the glove forming mold, but also contributes to the function of crosslinking a substantial portion of a glove to be eventually produced. The metal crosslinking agent that may be added later can be said to compensate the drawbacks of calcium in this crosslinking function.

(2) Maturation Step

As described above in the section regarding the pH modifier of the dip molding composition, the maturation step is the step of adjusting the above-described dip molding composition according to one embodiment to have a pH of usually 9.5 or higher, 10.5 or lower, preferably 10.0 to 10.5, and stirring this dip molding composition. It is believed that, by this step, the components in the dip molding composition are dispersed and homogenized.

(3) Dipping Step

The dipping step is the step of pouring the dip molding composition (dipping liquid), which has been stirred in the above-described maturation step, to a dipping tank and immersing the glove forming mold, to which the coagulant has been adhered and dried in the above-described coagulant adhesion step, in this dipping tank usually for 1 second or more, 60 seconds or less under a temperature condition of 25°C or higher, 35°C or lower.

In this step, the calcium ions contained in the coagulant cause the elastomer contained in the dip molding composition to aggregate on the surface of the glove forming mold, whereby a film is formed.

(4) Gelling Step

The gelling step is performed for the purposes of allowing crosslinking of the elastomer to slightly proceed and thereby inducing gelation to a certain extent such that the film is not deformed during the subsequent leaching and, at the same time, dispersing calcium in the film to attain sufficient calcium crosslinking later. As for the gelling conditions, the gelling step is generally performed for 1 minute or more, 4 minutes or less in a temperature range of usually 30°C or higher, 140°C or lower.

(5) Leaching Step

(a) The leaching step is the step of removing excess chemical agents and impurities that hinder the subsequent curing, such as calcium precipitated on the surface of the cured film precursor, by washing with water. Usually, the glove forming mold is rinsed in heated water at 30°C or higher, 80°C or lower for 1.5 minutes or more, 4 minutes or less.

(b) Leaching is an important step for removing an emulsifier constituting a film of latex particles so as to allow crosslinking to proceed smoothly in the curing step, maintaining the metal crosslinking agent in the film by converting complex ions into water-insoluble hydroxides, and removing excess calcium derived from the coagulant and potassium derived from the pH modifier.

(6) Beading Step

The beading step is the step of, after the completion of the leaching step, rolling up a glove cuff end of the cured film precursor to make a ring of an appropriate thickness and thereby reinforce the cuff end. A rolled portion having good adhesion is obtained by performing the beading step in a wet state after the leaching step.

(6') Precuring Step

(a) The precuring step is the step of, after the beading step, heating and drying the cured film precursor at a temperature lower than the temperature of the subsequent curing step. In this step, the heating and drying are usually performed at 60°C or higher, 90°C or lower for 30 seconds or more, 5 minutes or less or so. When the curing step is performed at a high temperature without the precuring step, water may be rapidly evaporated and blister-like bumps may be formed on the resulting glove, causing deterioration of the quality; however, the production process may proceed to the curing step without going through this precuring step.

(b) The temperature may be increased to a final temperature of the curing step without going through the precuring step; however, when curing is performed in plural drying furnaces and the first drying furnace has a slightly lower temperature, the drying performed in this first drying furnace corresponds to the precuring step.

(7) Curing Step

The curing step is the step of heating and drying the cured film precursor at a high temperature to ultimately complete crosslinking and obtain a cured film as a glove. The heating and drying are usually performed at 90°C or higher, 140°C or lower for 10 minutes or more, 30 minutes or less, preferably 15 minutes or more, 30 minutes or less or so.

(8) Double-Dipping

With regard to a glove production method, so-called single-dipping has been described in the above. In contrast, the dipping step and the gelling step may be performed twice or more, and this process is usually referred to as "double-dipping".

Double-dipping is performed for the purpose of, for example, inhibiting the generation of pin-holes in the production of a thick glove (having a thickness of about greater than 200 μm but about 300 μm or less) as well as in the production of a thin glove.

As a point to be noted for double-dipping, for example, in order to allow XNBR to aggregate in the second dipping step, a sufficient time is required in the first gelling step so as to cause calcium to adequately precipitate on the surface of the resulting film.

When the physical properties of the molded article produced using the dip molding composition are evaluated, the evaluation is conducted after performing at least one day of temperature and humidity conditioning following the removal of the molded article from the glove forming mold.

3. Molded Article

A molded article (also referred to as "dip-molded article") produced by the above-described production method using the above-described dip molding composition is flexible while having excellent stress retention rate as compared to conventional XNBR molded articles. In conventional XNBR molded articles, at the time of polymerization, the amount of crosslinked structures of latex is reduced and a carboxylic acid is used in a large amount to complement interparticle gaps with a metal crosslinking agent such as zinc; therefore, the elasticity inherent to rubber has been diminished. In contrast, in the molded article according to the present embodiment, the elasticity inherent to rubber, namely excellent stress retention rate and flexibility, are restored, and other physical properties are maintained. Further, in this molded article, not only the stress retention rate is increased by crosslinked structures of XNBR itself and intraparticle crosslinks formed by the epoxy crosslinking agent with carboxyl groups contained in the latex particles, but also the amount of carboxylic acid residues in the latex particles is minimized, and crosslinking thereof with calcium and zinc is reduced as much as possible while the interparticle crosslinking is complemented by a portion of the epoxy crosslinking agent, whereby a more flexible molded article can be produced. In an XNBR latex, the stress retention rate can also be increased by sulfur vulcanization that generates a large amount of intraparticle crosslinks; however, this has a problem of causing type IV allergy. In addition, the stress retention rate is reduced by complementing interparticle crosslinking with crosslinks formed by carboxylic acid residues contained in the latex particles and zinc, and this makes the resulting molded article hard. In this sense, the present inventors believed that, as an alternative to a molded article produced by sulfur crosslinking, a molded article produced by epoxy crosslinking is optimal among currently conceivable options.

The properties of the molded article of the present embodiment will now be described using a glove as an example.

Examples of the properties of the above-described glove include tensile strength, modulus, elongation rate, stress retention rate, and fatigue durability.

These physical properties can be measured by the below-described respective test methods.

<Tensile Strength, Modulus, and Elongation Rate>

The tensile strength, modulus, and elongation rate of a dip-molded article are measured in accordance with the method prescribed in ASTM D412. The dip-molded article is punched out using Die-C manufactured by Dumbbell Co., Ltd. to prepare a test piece. The test piece is measured using AllroundLine universal testing machine Z-100 manufactured by ZwickRoell Corporation at a test rate of 500 mm/min, a chuck distance of 75 mm, and a gauge mark distance of 25 mm.
As glove physical properties, a tensile strength of 14 MPa or higher and an elongation rate of 500% or higher are considered as a reference.
With regard to the modulus, particularly from the standpoint of obtaining satisfactory flexibility that does not hinder the movement of fingers wearing the glove, focus is given to the modulus at 100% elongation (100% modulus), the modulus at 300% elongation (300% modulus), and the modulus at 500% elongation (500% modulus).
XNBR gloves that are commercially available at present have a modulus of about 3 to 4 MPa at 100% elongation, about 9 to 12 MPa at 300% elongation, and about 20 to 35 MPa at 500% elongation; however, this means that these XNBR gloves are considerably harder than natural rubber that has a modulus of about 1 to 1.5 MPa, about 3 to 5 MPa, and about 8 to 12 MPa, respectively. In view of this, the present inventors take, as a reference, a 100% modulus of 2 MPa or less, a 300% modulus of 4 MPa or less, and a 500% modulus of 15 MPa or less, and believe that, by achieving these modulus values, sufficient effects can be obtained in terms of, for example, the ease of performing fine operations with fingertips.
As an index of the tensile strength, the FAB (Force at Break) may be used as well.
In a tensile test of a film constituting a molded article, the FAB (EN Standard) is preferably not less than 5.5 N, more preferably not less than 6.0 N, and an upper limit value thereof is not particularly restricted.
The FAB can be measured in accordance with the method of the EN455-2:2009 standard using, for example, a testing apparatus STA-1225 (manufactured by A&D Co., Ltd.) at a test rate of 500 mm/min and a chuck distance of 75 mm.

<Stress Retention Rate>

The stress retention rate is determined as follows.
A test piece is prepared from a dip-molded article (cured film) in accordance with ASTM D412 using Die-C manufactured by Dumbbell Co., Ltd., and gauge marks are drawn on the test piece at a gauge mark distance of 25 mm.
This test piece is mounted on a tensile tester at a chuck distance of 90 mm, and stretched at a tensile speed of 500 mm/min. The stretching of the test piece is terminated once the gauge mark distance is doubled and, at the same time, the stress M0 at 100% elongation is measured. Change in the stress is measured while maintaining the test piece after the termination of the stretching, and the stress M6 is measured after a lapse of 6 minutes. Then, the stress retention rate is calculated as (M6/M0) $\times$ 100 (%). A higher stress retention rate indicates a state where more stress is maintained after the stretching, which represents a larger elastic deformation force causing the test piece to return back to the original shape upon removal of an external force, and makes the glove to have a better fit and more favorable tightening of its cuff portion, so that the glove is less wrinkled.
The stress retention rate determined by the above-described method is in the order of 30% for conventional sulfur-crosslinked XNBR gloves; therefore, the molded article of the present embodiment is favorable as an XNBR glove when it has a stress retention rate of 50% or higher, and the stress retention rate is more preferably 60% or higher.

<Fatigue Durability>

The fatigue durability is represented by the time until a 120 mm-long #1 dumbbell test piece according to JIS K6251, which is prepared from a dip-molded article (cured film), is torn when the test piece is repeatedly elongated and relaxed in the lengthwise direction between a maximum length of 195 mm and a minimum length of 147 mm by pulling the upper part of the test piece with the lower part being immobilized and immersed in an artificial sweat solution up to a length of 60 mm. The elongation (195 mm) and the relaxation (147 mm) can be performed by repeating a cycle (12.8 seconds/cycle) of maintaining the test piece in a relaxed state for 11 seconds, subsequently elongating the test piece to a length of 195 mm (163%) in 1.8 seconds, and then allowing the test piece to relax back to a length of 147 mm (123%).
From the standpoint of practical application of the dip-molded article as a glove, the fatigue durability is preferably 60 minutes or longer.
More particularly, a fatigue durability test can be performed using such an apparatus as illustrated in FIG. 1 along with a dumbbell-shaped test piece in the same manner as in the case of performing a tensile test or the like of a rubber product. As illustrated in FIG. 1(a), the lower end of a test piece is immobilized with a clamp, and the test piece is immersed in an artificial sweat solution up to 60 mm. Subsequently, the upper end of the test piece is clamped, and the test piece is elongated and relaxed in the vertical direction using an air pressure piston such that the test piece is brought into a relaxed

state of FIG. 1(b), an elongated state of FIG. 1(c), and then a relaxed state of FIG. 1(b). Taking this elongation-contraction cycle of FIG. 1(b) → FIG. 1(c) → FIG. 1(b) as one cycle, the fatigue durability is evaluated by measuring the number of cycles and the time that are required for the test piece to be torn. The apparatus is configured such that a photoelectric sensor reacts to stop the operation when the test piece is torn.

## EXAMPLES

### 1. Method of Execution

The present invention will now be described in more detail by way of Examples.

The amount (parts by weight) of each additive is based on the solid content, and the amount (parts by weight) of an epoxy crosslinking agent is based on a total weight of crosslinking agents.

In the below-described Examples, cases where a cured film or a glove was produced as a molded article that is a cured product of a dip molding composition is described.

### (1) Production of Synthetic Latex Compositions Containing Carboxyl Group-Containing Nitrile Rubber Elastomer

<Synthetic Latex Composition 1>

After purging the inside of a stirrer-equipped pressure-resistant autoclave with nitrogen, 69 parts of 1,3-butadiene, 27 parts of acrylonitrile, and 4 parts of methacrylic acid (total amount of these monomers: 100 parts), as well as 0.4 parts of a chain transfer agent (TDM: t-dodecylmercaptan), 150 parts of water, 2.5 parts of an anionic emulsifier (SDBS: sodium dodecylbenzenesulfonate), an oxygen scavenger (sodium dithionite), 0.1 parts of a chelating agent EDTA (CHELEST 400G, manufactured by Chelest Corporation), and a particle size modifier (potassium pyrophosphate) were added to the autoclave along with 0.005 parts of *p*-menthane hydroperoxide (PMHP) (PERMENTA H, manufactured by NOF Corporation) and 0.02 parts of sodium formaldehyde sulfoxylate (SFS) as redox-type polymerization initiators, and 0.005 parts of ferrous sulfate. These materials were allowed to react for 20 hours with stirring while the polymerization temperature was maintained at 25°C. After the polymerization conversion rate was confirmed to be 99%, the polymerization reaction was terminated with an addition of a pH modifier and a polymerization terminator. Unreacted monomers were removed from the thus obtained latex composition under reduced pressure, and the pH and the concentration of the latex composition was subsequently adjusted with an aqueous ammonia solution to attain a solid concentration of 45% and a pH of 8.3, after which an aqueous dispersion of a butylated reaction product of *p*-cresol and dicyclopentadiene (e.g., BOSTEX 362, manufactured by Akron Dispersion Inc.) in an amount of 0.5 parts by weight in terms of solid content was added as an anti-aging agent to 100 parts by weight of latex, whereby a synthetic latex composition was obtained.

<Synthetic Latex Composition 2>

A synthetic latex composition was obtained under substantially the same production conditions as the synthetic latex composition 1, except that the amounts of 1,3-butadiene, acrylonitrile and methacrylic acid were 73.5 parts, 22 parts and 4.5 parts, respectively (total amount of these monomers: 100 parts), and the polymerization temperature was 45°C.

<Synthetic Latex Composition 3>

After purging the inside of a stirrer-equipped pressure-resistant autoclave with nitrogen, 69.5 parts of 1,3-butadiene, 25 parts of acrylonitrile, and 5.5 parts of methacrylic acid (total amount of these monomers: 100 parts), as well as 0.8 parts of a chain transfer agent (TDM: t-dodecylmercaptan), 150 parts of water, 2.5 parts of an anionic emulsifier (SDBS: sodium dodecylbenzenesulfonate), an oxygen scavenger (sodium dithionite), 0.1 parts of a chelating agent EDTA (CHELEST 400G, manufactured by Chelest Corporation), and a particle size modifier (potassium pyrophosphate) were added to the autoclave along with 0.005 parts of *p*-menthane hydroperoxide (PMHP) (PERMENTA H, manufactured by NOF Corporation) and 0.02 parts of sodium formaldehyde sulfoxylate (SFS) as redox-type polymerization initiators, and 0.005 parts of ferrous sulfate. These materials were allowed to react for 20 hours with stirring while the polymerization temperature was maintained at 15°C. After the polymerization conversion rate was confirmed to be 87%, the polymerization reaction was terminated with an addition of a pH modifier and a polymerization terminator. Unreacted monomers were removed from the thus obtained latex composition under reduced pressure, and the pH and the concentration of the latex composition was subsequently adjusted with an aqueous ammonia solution to attain a solid concentration of 45% and a pH of 8.3, after which an aqueous dispersion of a butylated reaction product of *p*-cresol and dicyclopentadiene (e.g., BOSTEX 362, manufactured by Akron Dispersion Inc.) in an amount of 0.5 parts by weight in terms of solid content was added as an anti-aging agent to 100 parts by weight of latex, whereby a synthetic latex composition was obtained.

<Synthetic Latex Composition 4>

A latex composition was obtained under the same production conditions using the same formulation as the synthetic latex composition 1, except that the amount of the chain transfer agent was 0.7 parts and the polymerization conversion rate was 96%.

<Synthetic Latex Composition 5>

A latex composition was obtained under substantially the same production conditions using the same formulation as the synthetic latex composition 1, except that the amount of the chain transfer agent was 0.5 parts and the polymerization conversion rate was 98%.

<Synthetic Latex Composition 6>

A latex composition was obtained under substantially the same production conditions as the synthetic latex composition 1, except that the amount of methacrylic acid and that of 1,3-butadiene were changed to 3 parts and 70 parts, respectively.

<Synthetic Latex Composition 7>

A latex composition was obtained under substantially the same production conditions as the synthetic latex composition 1, except that the amount of methacrylic acid and that of 1,3-butadiene were changed to 6.5 parts and 66.5 parts, respectively.

<Synthetic Latex Composition 8>

A latex composition was obtained under substantially the same production conditions as the synthetic latex composition 1, except that the amount of acrylonitrile and that of 1,3-butadiene were changed to 22 parts and 74 parts, respectively.

<Synthetic Latex Composition 9>

A latex composition was obtained under substantially the same production conditions as the synthetic latex composition 1, except that the amount of acrylonitrile and that of 1,3-butadiene were changed to 25 parts and 71 parts, respectively.

The properties of the elastomers used in the present Experiments are shown in Table 1 below.

[Table 1-1]

| Synthetic latex composition | Formulation (% by weight) | | | Polymerization conditions | | | |
|---|---|---|---|---|---|---|---|
| | Butadiene | Acrylonitrile | Methacrylic acid | Chain transfer agent (parts) | Polymerization temperature (° C) | Polymerization time (hr) | Polymerization conversion rate (%) |
| Composition 1 | 69.0 | 27.0 | 4.0 | 0.4 | 25 | 20 | 99 |
| Composition 2 | 73.5 | 22.0 | 4.5 | 0.4 | 45 | 20 | 99 |
| Composition 3 | 69.5 | 25.0 | 5.5 | 0.8 | 15 | 20 | 87 |
| Composition 4 | 69.0 | 27.0 | 4.0 | 0.7 | 25 | 20 | 96 |
| Composition 5 | 69.0 | 27.0 | 4.0 | 0.5 | 25 | 20 | 98 |
| Composition 6 | 70.0 | 27.0 | 3.0 | 0.4 | 25 | 20 | 99 |

(continued)

| Synthetic latex composition | Formulation (% by weight) | | | Polymerization conditions | | | |
|---|---|---|---|---|---|---|---|
| | Butadiene | Acrylonitrile | Methacrylic acid | Chain transfer agent (parts) | Polymerization temperature (° C) | Polymerization time (hr) | Polymerization conversion rate (%) |
| Composition 7 | 66.5 | 27.0 | 6.5 | 0.4 | 25 | 20 | 99 |
| Composition 8 | 74.0 | 22.0 | 4.0 | 0.4 | 25 | 20 | 99 |
| Composition 9 | 71.0 | 25.0 | 4.0 | 0.4 | 25 | 20 | 99 |
| 8503S | 69.9 | 26.7 | 3.4 | - | - | - | - |
| NL105 | 69.8 | 26.9 | 3.3 | - | - | - | - |
| LX550LA | - | - | - | - | - | - | - |

• Synthetic latex compositions 1 to 9 in Table 1 are all XNBRs.
• Shown below the synthetic latex compositions 1 to 9 are the data of commercially available products for reference: 8503S is manufactured by Bangkok Synthetics Co., Ltd.; NL105 is manufactured by LG Chem, Ltd.; and LX550LA is manufactured by Zeon Corporation.

[Table 1-2]

| Synthetic latex composition | Properties | | |
|---|---|---|---|
| | MEK-insoluble content (% by weight) | MEK swelling rate (times) | Mooney viscosity |
| Composition 1 | 68.0 | 27 | MS113 |
| Composition 2 | 71.0 | - | - |
| Composition 3 | 30.0 | - | - |
| Composition 4 | 38.5 | - | - |
| Composition 5 | 59.1 | - | - |
| Composition 6 | 65.3 | - | - |
| Composition 7 | 58.4 | - | - |
| Composition 8 | 67.0 | 37 | ML103 |
| Composition 9 | 70.0 | 36 | ML107 |
| 8503S | 35.0 | 60 | 121 |
| NL105 | 2.0 | 124 | 75 |
| LX550LA | 1.8 | 122 | 139 |

• Synthetic latex compositions 1 to 9 in Table 1 are all XNBRs.
• Shown below the synthetic latex compositions 1 to 9 are the data of commercially available products for reference: 8503S is manufactured by Bangkok Synthetics Co., Ltd.; NL105 is manufactured by LG Chem. Ltd.; and LX550LA is manufactured by Zeon Corporation.

The properties of the elastomers used in the present Experiments were determined as follows.

<MEK Swelling Rate and MEK-Insoluble Content>

The MEK swelling rate and the MEK-insoluble content were determined as follows. About 0.2 g of a dry sample of each synthetic latex composition was precisely weighed to determine the pre-immersion weight of the synthetic latex composition dry sample (W1). This dry sample was placed in a 80-mesh basket made of metal and, in this state, the whole

basket was immersed into 80 mL of MEK in a 100-mL beaker. The beaker was then sealed with parafilm and left to stand for 24 hours at room temperature. Subsequently, the mesh basket was taken out of the beaker, the weight thereof was measured, and the weight of swollen synthetic latex composition (W2) was determined by subtracting the weight of the basket. Thereafter, the mesh basket was hung in a draft and dried for 1 hour. After vacuum-drying this mesh basket at 105°C for 1 hour, the weight thereof was measured, and the post-immersion weight of the synthetic latex composition dry sample (W3) was determined by subtracting the weight of the basket.

The MEK swelling rate was calculated using the following equation:

$$\text{MEK swelling rate (unit: parts)} = (\text{W2 (g)}/\text{W3 (g)})$$

Further, the MEK-insoluble content was calculated using the following equation:

$$\text{MEK-insoluble content (unit: \% by weight)} = (\text{W3 (g)}/\text{W1 (g)}) \times 100$$

The synthetic latex composition dry sample was prepared as follows. That is, in a 500-mL bottle, a latex of interest was stirred for 30 minutes at a rotation speed of 500 rpm, and 14 g of the latex was subsequently weighed on a 180 mm × 115 mm stainless-steel vat and dried for 5 days at a temperature of 23°C ± 2°C and a humidity of 50 ± 10 RH% to prepare a cast film, after which this cast film was cut into a 5-mm square to obtain a synthetic latex composition dry sample.

(2) Crosslinking Agent

<Epoxy Crosslinking Agent>

In Examples, "DENACOL EX-321" (trade name) manufactured by Nagase ChemteX Corporation was used as an epoxy crosslinking agent, and the physical properties thereof are as follows.

Epoxy equivalent: 140 g/eq.
Average number of epoxy groups: 2.7
MIBK/water distribution ratio: 87%
Amount of active ingredient: 27%

The epoxy equivalent is a catalog value, and the average number of epoxy groups is an analysis value.

The MIBK/water distribution ratio was determined by the method described above in the section of MODE FOR CARRYING OUT THE INVENTION.

In those Examples where the epoxy crosslinking agent was used, the epoxy crosslinking agent was added after being mixed with the same amount of diethylene glycol.

<Metal Crosslinking Agent>

As a metal crosslinking agent, zinc oxide was used. This zinc oxide used in Examples was "CZnO-50" (trade name) manufactured by Farben Technique (M) Sdn Bhd.

(3) Production and Evaluation of Molded Articles

<Production of Molded Articles (Gloves) of Experiments 1 to 3 and 5>

A ceramic immersion glove forming mold, which had been washed and heated, was immersed in a coagulant composed of a mixed aqueous solution of 14% by weight of calcium nitrite and 1.5% by weight of calcium stearate, and subsequently dried for 3 minutes under a condition where the glove forming mold had a surface temperature of 70°C, thereby adhering the coagulant thereto.

Then, based on Table 2, to each of the above-obtained synthetic latex compositions, the epoxy crosslinking agent and zinc oxide were added as crosslinking agents in Experiments 1 to 3, and a sulfur crosslinking agent and zinc oxide were added in Experiment 5. Further, titanium oxide was added as a pigment in all of Experiments 1 to 3 and 5, and each resultant was homogenized with stirring and adjusted to have a pH of 10.0 with KOH.

Next, after immersing the glove forming mold in the thus obtained dip molding composition for 30 seconds or more, 60 seconds or less, the glove forming mold was taken out and heated at 80°C for 1 minute to induce gelation of the resulting film on the glove forming mold. This film-laminated glove forming mold was immersed in heated water of 60°C or

higher, 70°C or lower for 3 minutes to perform a leaching treatment, after which the glove forming mold was left to stand in a test oven, heated at 70°C for 5 minutes, and then further heated at 130°C for 20 minutes without being taken out of the oven.

The glove forming mold was cooled until its surface temperature dropped to 40°C, and subsequently immersed for 40 seconds in a chlorination immersion bath adjusted to have an active chlorine concentration of 900 ppm or higher, 1,000 ppm or lower with sodium hypochlorite and hydrochloric acid. This glove forming mold was washed with water, then with a 0.4% aqueous sodium sulfate solution, and again with water, followed by drying at 100°C for 5 minutes. The glove forming mold was sufficiently cooled at room temperature, and the film was subsequently removed from the glove forming mold. The thus prepared film was subjected to 24-hour humidity conditioning at a temperature of 25°C and a humidity of 55%RH, and the below-described properties were evaluated. The evaluation results are shown in Table 2. It is noted here that, in Table 2, "PMHP" represents *p*-menthane hydroperoxide, and "SFS" represents sodium formaldehyde sulfoxylate.

<Production of Molded Article (Film) of Experiment 4>

A ceramic immersion plate, which had been washed and heated, was immersed in a coagulant composed of a mixed aqueous solution of 20% by weight of calcium nitrite and 1.0% by weight of sodium stearate, and subsequently dried until the immersion plate had a surface temperature of 60°C, thereby adhering the coagulant thereto.

Then, to the respective latex shown in Table 1, the epoxy crosslinking agent and/or zinc oxide was/were added as a crosslinking agent(s) in varying amounts, and each resultant was homogenized with stirring and adjusted to have a pH of 10.0 with KOH in all of Experiments.

Next, after immersing the immersion plate in the thus obtained dip molding composition for 10 seconds or more, 15 seconds or less, the immersion plate was taken out and heated at 50°C for 2 minutes to induce gelation of the resulting film on the immersion plate. This film-laminated immersion plate was immersed in heated water of 50°C for 2 minutes to perform a leaching treatment, after which the immersion plate was heated at 70°C for 5 minutes in a test oven and then further heated at 130°C for 30 minutes.

The immersion plate was sufficiently cooled at room temperature, and the film was subsequently removed from the immersion plate. After leaving the thus prepared film to stand at room temperature for one week, the film was subjected to humidity conditioning at a humidity of 50 to 60%RH for at least 12 hours, and the properties of this film were evaluated.

<Evaluation of Molded Articles>

<Stress Retention Rate>

The stress retention rate was measured in accordance with the above-described method.

<Tensile Strength, Modulus, and Elongation Rate>

The tensile strength, the modulus, and the elongation rate were measured in accordance with the above-described method.

<Fatigue Durability>

Each molded article was immersed in an artificial sweat solution (which contained 20 g of sodium chloride, 17.5 g of ammonium chloride, 17.05 g of lactic acid and 5.01 g of acetic acid in 1 liter, and whose pH had been adjusted to 4.7 with an aqueous sodium hydroxide solution), and the fatigue durability was evaluated in accordance with the above-described method.

<Experiment A>

All of Experiments 1 to 3 and 5 are the gloves produced above in <Production of Molded Articles (Gloves) of Experiments 1 to 3 and 5>.

In Experiments 1 to 3, the synthetic latex composition 1 or 2 having an MEK-insoluble content of 68% by weight or 71% by weight was used, and 1 part by weight or 2 parts by weight of the epoxy crosslinking agent and 0.3 parts by weight or 0.5 parts by weight of zinc oxide were crosslinked thereto. In contrast, in Experiment 4, the synthetic latex composition 3 having an MEK-insoluble content of 30% by weight was used, and 1 part by weight of the epoxy crosslinking agent and 0.5 parts by weight of zinc oxide were crosslinked thereto. In Experiment 5, the synthetic latex composition 1 having an MEK-insoluble content of 68% by weight was vulcanized with sulfur and crosslinked with zinc.

The results of measuring the gloves are shown in Table 2.

[Table 2]

| | | | Experiment 1 | Experiment 2 | Experiment 3 | Experiment 4 | Experiment 5 |
|---|---|---|---|---|---|---|---|
| | | | Example | Example | Example | Comparative Example | Comparative Example |
| Synthetic latex composition | Synthetic latex composition | | 1 | 1 | 2 | 3 | 1 |
| | Formulation (% by weight) | Butadiene | 69.0 | 69.0 | 73.5 | 69.5 | 69.0 |
| | | Acrylonitrile | 27.0 | 27.0 | 22.0 | 25.0 | 27.0 |
| | | Methacrylic acid | 4.0 | 4.0 | 4.5 | 5.5 | 4.0 |
| | Polymerization conversion rate (%) | | 99 | 99 | 99 | 87 | 99 |
| | Chain transfer agent (parts) | | 0.4 | 0.4 | 0.4 | 0.8 | 0.4 |
| | MEK-insoluble content (% by weight) | | 68.0 | 68.0 | 71.0 | 30.0 | 68.0 |
| | Mooney viscosity | | MS113 | MS113 | - | - | MS113 |
| Dip molding composition | Formulation (parts by weight) | Latex | 100 | 100 | 100 | 100 | 100 |
| | | Epoxy cross-linking agent (EX-321) | 1.0 | 2.0 | 2.0 | 1.0 | - |
| | | Diethylene glycol | 1.0 | 2.0 | 2.0 | 1.0 | - |
| | | Sulfur | - | - | - | - | 1.0 |
| | | Vulcanization accelerator (ZDEC) | - | - | - | - | 0.5 |
| | | Zinc oxide | 0.3 | 0.5 | 0.5 | 0.5 | 0.7 |
| | | Titanium oxide | 1.5 | 1.0 | 1.0 | 1.5 | 1.5 |
| | pH | | 10.0 | 10.0 | 100 | 9.8 | 10.0 |
| Physical properties of molded article | Thickness (mm) | | 0.060 | 0.060 | 0.065 | 0.054 | 0.058 |
| | 100% modulus (MPa) | | 1.62 | 1.90 | 1.23 | 1.98 | 1.61 |
| | 300% modulus (MPa) | | 2.68 | 3.22 | 2.21 | 3.82 | 2.95 |
| | 500% modulus (MPa) | | 6.48 | 7.92 | 6.12 | 12.49 | 7.97 |
| | Elongation rate (%) | | 615 | 598 | 578 | 559 | 590 |
| | Tensile strength (MPa) | | 23.44 | 23.67 | 20.83 | 24.70 | 21.89 |
| | FAB (N) | | 5.71 | 6.13 | 5.46 | 6.14 | 6.00 |
| | Stress retention rate (%) | | 61.6 | 63.4 | 64.2 | 43.0 | 51.6 |
| | Fatigue durability (min) | | 268 | 345 | 310 | 280 | 112 |

• ZDEC: zinc diethyldithiocarbamate
• Curing condition: at 130° C for 20min
• The molded articles of Experiments 1 to 4 are gloves.

From the results shown in Table 2, the followings were found.

It is seen that the gloves of Experiments 1 to 3 had a stress retention rate of higher than 60% and a 500% modulus of 6 to 7 MPa and were thus flexible and rich in rubber elasticity. In addition, these gloves exhibited good elongation, tensile

strength, and fatigue durability. The high stress retention rate was attributed to the high MEK-insoluble content of the respective synthetic latex compositions and the crosslinking with the epoxy crosslinking agent.

Further, these gloves were flexible and exhibited good elongation because the epoxy crosslinking agent had a low degree of hardening the gloves and reducing the elongation of the gloves. Moreover, the tensile strength was maintained by the crosslinking with zinc, and the fatigue durability was provided by the epoxy crosslinking agent.

As compared to Experiments 1 to 3, the glove of Experiment 4 was harder with a much lower stress retention rate and a 500% modulus of 12.49 MPa, and its physical properties were similar to those of a conventional XNBR glove. This is because the synthetic latex composition had an MEK-insoluble content of 30%. In the glove of Experiment 5 which was obtained by performing conventional sulfur vulcanization and zinc oxide crosslinking on the synthetic latex composition having a high MEK-insoluble content, particularly the stress retention rate was reduced by at least about 10% as compared to Experiments 1 to 3, and the fatigue durability was deteriorated as well. These are a result of changing epoxy crosslinking to sulfur crosslinking.

<Experiment B>

The most important technical feature of the present invention is that the MEK-insoluble content is set at 60 to 80%.

In this Experiment B, the same formulation of latex was used and the crosslinking agent was added in the same manner as in Experiment 1 while changing the amount of the chain transfer agent and the polymerization method, and it was examined how the film physical properties were modified by a change in the MEK-insoluble content, using the synthetic latex compositions having an MEK-insoluble content of 38.5% in Experiment 6 or 59.1% in Experiment 7 as opposed to the synthetic latex composition having an MEK-insoluble content of 68%.

It is noted here that it was difficult to produce a film from a synthetic latex composition having an MEK-insoluble content of higher than 80%.

[Table 3]

| | | Experiment 6 | Experiment 7 | Experiment 1 |
|---|---|---|---|---|
| | | Comparative Example | Comparative Example | Example |
| Synthetic latex composition | Synthetic latex composition | 4 | 5 | 1 |
| | Type of initiator used in latex production | PMHP+SFS | PMHP+SFS | PMHP+SFS |
| | Polymerization temperature (° C) | 25 | 25 | 25 |
| | Polymerization time (hr) | 20 | 20 | 20 |
| | Polymerization conversion rate (%) | 96 | 98 | 99 |
| | Chain transfer agent (parts) | 0.7 | 0.5 | 0.4 |
| | MEK-insoluble content (% by weight) | 38.5 | 59.1 | 68.0 |
| | Mooney viscosity | - | - | MS113 |
| pH | | 10.0 | 10.0 | 10.0 |
| Intrinsic properties | 500% modulus (MPa) | - | - | 6.49 |
| | Elongation rate (%) | - | - | 679 |
| | Tensile strength (MPa) | - | - | 18.8 |
| | Stress retention rate (%) | - | - | 58.9 |
| Crosslinking agent | Epoxy (parts by weight) | 1.0 | 1.0 | 1.0 |
| | Zinc oxide (parts by weight) | 0.3 | 0.3 | 0.3 |
| Physical properties of molded article | Thickness (mm) | 0.059 | 0.063 | 0.060 |
| | 500% modulus (MPa) | 6.98 | 5.78 | 6.48 |
| | Elongation rate (%) | 623 | 625 | 615 |
| | Tensile strength (MPa) | 25.30 | 24.45 | 23.44 |
| | Stress retention rate (%) | 47.8 | 58.5 | 61.6 |
| | Fatigue durability (min) | 250 | 277 | 268 |

(continued)

| | Experiment 6 | Experiment 7 | Experiment 1 |
|---|---|---|---|
| | Comparative Example | Comparative Example | Example |
| • Curing conditions: at 130° C for 30 min (film), at 130° C for 20 min (glove)<br>• The physical properties of each molded article are of a glove, and the intrinsic properties are of a film. The intrinsic properties shown in Table above are the physical properties of each molded article that was crosslinked only with calcium derived from a coagulant in the absence of a crosslinking agent. | | | |

According to Table 3, the stress retention rate was greatly improved once the MEK-insoluble content exceeded about 60% as in that, while the stress retention rate of the molded article was low at 47.8% when the MEK-insoluble content was 38.5% by weight in Experiment 6, the stress retention rate was 58.5% when the MEK-insoluble content was 59.1% by weight in Experiment 7, and the stress retention rate was 61.6% when the MEK-insoluble content was 68.0% by weight in Experiment 1.

<Experiment C>

The second most important technical feature of the present invention is that the carboxylic acid content is 3.5% by weight or more, 6% by weight or less.

In Experiment 1, a flexible glove having a high stress retention rate was produced by using the synthetic latex composition 1 containing 4.0% by weight of methacrylic acid and performing epoxy crosslinking and zinc crosslinking thereon.

In this Experiment C, using the synthetic latex compositions 6 and 7 containing 3.0% by weight and 6.5% by weight of methacrylic acid, respectively, under substantially the same conditions as in Experiment 1, it was examined how the film properties were modified by a change in the amount of methacrylic acid.

[Table 4]

| | | | Experiment 8 | Experiment 1 | Experiment 9 |
|---|---|---|---|---|---|
| | | | Comparative Example | Example | Comparative Example |
| Synthetic latex composition | Synthetic latex composition | | 6 | 1 | 7 |
| | Formulation (% by weight) | Butadiene | 70.0 | 69.0 | 66.5 |
| | | Acrylonitrile | 27.0 | 27.0 | 27.0 |
| | | Methacrylic acid | 3.0 | 4.0 | 6.5 |
| | MEK-insoluble content (% by weight) | | 65.3 | 68 | 58.4 |
| | Mooney viscosity | | - | MS113 | - |
| pH | | | 10.2 | 10.0 | 10.0 |
| Intrinsic properties | 500% modulus (MPa) | | - | 6.49 | - |
| | Elongation rate (%) | | - | 679 | - |
| | Tensile strength (MPa) | | - | 18.8 | - |
| | Stress retention rate (%) | | - | 58.9 | - |
| Crosslinking agent | Epoxy (parts by weight) | | 1.0 | 1.0 | 1.0 |
| | Zinc oxide (parts by weight) | | 0.5 | 0.3 | 0.5 |

(continued)

| | | Experiment 8 | Experiment 1 | Experiment 9 |
|---|---|---|---|---|
| | | Comparative Example | Example | Comparative Example |
| Physical properties of molded article | Thickness (mm) | 0.060 | 0.060 | 0.059 |
| | 500% modulus (MPa) | 3.97 | 6.48 | 13.97 |
| | Elongation rate (%) | 676 | 615 | 554 |
| | Tensile strength (MPa) | 13.50 | 23.44 | 31.50 |
| | Stress retention rate (%) | 61.2 | 61.6 | 46.6 |
| | Fatigue durability (min) | 156 | 268 | 290 |
| • Curing conditions: at 130° C for 30 min (film), at 130° C for 20 min (glove)<br>• The molded articles of Experiments 1, 8 and 9 are gloves, and the intrinsic properties are of a film. In Experiments 8 and 9, zinc oxide was used in a slightly larger amount of 0.5 parts by weight. The intrinsic properties shown in Table above are the physical properties of each molded article that was crosslinked only with calcium derived from a coagulant in the absence of a crosslinking agent. | | | | |

According to Table 4, in Experiment 8 (amount of methacrylic acid = 3% by weight), the 500% modulus, the elongation rate, and the stress retention rate were favorable; however, the tensile strength and the fatigue durability were poor. On the other hand, in Experiment 9 (amount of methacrylic acid = 6.5% by weight), the 500% modulus, the elongation rate, and the stress retention rate were poor; however, the tensile strength was high. Based on these results, it is believed that the amount of methacrylic acid is preferably 3.5% by weight to 6% by weight, more preferably 3.5% by weight to 5% by weight. In addition, it is seen that an increase in the amount of methacrylic acid caused a reduction in the 500% modulus and the elongation rate, and that a smaller amount of methacrylic acid is more preferred for maintaining the flexibility and the elongation. In XNBRs, a carboxylic acid is an important element, and it is necessary to consider, for example, providing a sufficient amount of embedded carboxylic acid for intraparticle epoxy crosslinking as well as sufficient zinc crosslinking between particles while not allowing excessive crosslinking with calcium.

<Experiment D>

In the present embodiment, the amount of acrylonitrile in XNBR is set in a range of 20 to 30% by weight. Usually, an XNBR containing 25 to 30% by weight of acrylonitrile is referred to as "medium-nitrile XNBR", and the acrylonitrile content in XNBR gloves is most commonly 27%.

In Experiment 1, the acrylonitrile content is set at 27%.

In XNBR gloves, acrylonitrile is an important element since the polarity of its nitrile group (-C=N) maintains the tensile strength and increases the oil resistance. Accordingly, medium-nitrile XNBRs have been used in XNBR gloves. On the other hand, since a low nitrile content of 20 to 24% leads to a low tensile strength and poor oil resistance, there is currently almost no XNBR glove product in which such a low nitrile content is implemented. However, a reduction in the amount of acrylonitrile leads to an increased flexibility; therefore, this Experiment D was conducted with varying amounts of acrylonitrile at 27% by weight, 25% by weight, and 22% by weight in a manner to increase the flexibility of the latex.

Further, in this Experiment D, the amount of the epoxy crosslinking agent and that of zinc oxide were changed, and the performance of the resulting molded articles was evaluated as well.

[Table 5-1-1]

| Experimental Examples of Synthetic Latex Composition 1 (acrylonitrile amount: 27% by weight) | | | | | | |
|---|---|---|---|---|---|---|
| | | | Experiment 10 | Experiment 11 | Experiment 12 | Experiment 13 |
| | | | Example | Example | Example | Example |
| Synthetic latex composition | Synthetic latex composition | | 1 | 1 | 1 | 1 |
| | Formulation (% by weight) | Butadiene | 69 | 69 | 69 | 69 |
| | | Acrylonitrile | 27 | 27 | 27 | 27 |
| | | Methacrylic acid | 1 | 1 | 1 | 1 |
| | MEK-insoluble content (% by weight) | | 68 | 68 | 68 | 68 |
| | Mooney viscosity | | MS113 | MS113 | MS113 | MS113 |
| pH | | | 10.0 | 10.0 | 10.0 | 10.0 |
| Crosslinking agent | Epoxy (EX-321) (parts by weight) | | 0.3 | 0.5 | 1.0 | 0.5 |
| | Zinc oxide (parts by weight) | | 0.0 | 0.0 | 0.0 | 0.3 |
| Physical properties of molded article | Thickness (mm) | | 0.085 | 0.086 | 0.080 | 0.080 |
| | 100% modulus (MPa) | | 1.74 | 1.84 | 2.05 | 2.04 |
| | 300% modulus (MPa) | | 2.99 | 3.31 | 4.11 | 3.85 |
| | 500% modulus (MPa) | | 6.31 | 7.32 | 10.57 | 9.10 |
| | Elongation rate (%) | | 666 | 634 | 565 | 634 |
| | Tensile strength (MPa) | | 17.6 | 16.8 | 17.1 | 24.3 |
| | Stress retention rate (%) | | 60.7 | 61.9 | 65.2 | 58.1 |
| | Fatigue durability (min) | | >240 | >240 | >240 | >240 |
| • Curing condition: at 130° C for 30 min<br>• Experiments 10 to 16 are films. | | | | | | |

[Table 5-1-2]

| Experimental Examples of Synthetic Latex Composition 1 (acrylonitrile amount: 27% by weight) | | | | | |
|---|---|---|---|---|---|
| | | | Experiment 14 | Experiment 15 | Experiment 16 |
| | | | Example | Example | Example |
| Synthetic latex composition | Synthetic latex composition | | 1 | 1 | 1 |
| | Formulation (% by weight) | Butadiene | 69 | 69 | 69 |
| | | Acrylonitrile | 27 | 27 | 27 |
| | | Methacrylic acid | 1 | 1 | 1 |
| | MEK-insoluble content (% by weight) | | 68 | 68 | 68 |
| | Mooney viscosity | | MS113 | MS113 | MS113 |
| pH | | | 10.0 | 10.0 | 10.0 |
| Crosslinking agent | Epoxy (EX-321) (parts by weight) | | 0.5 | 1.0 | 1.0 |
| | Zinc oxide (parts by weight) | | 0.5 | 0.3 | 0.5 |

(continued)

| Experimental Examples of Synthetic Latex Composition 1 (acrylonitrile amount: 27% by weight) | | | | |
|---|---|---|---|---|
| | | Experiment 14 | Experiment 15 | Experiment 16 |
| | | Example | Example | Example |
| Physical properties of molded article | Thickness (mm) | 0.085 | 0.082 | 0.087 |
| | 100% modulus (MPa) | 2.31 | 2.11 | 2.38 |
| | 300% modulus (MPa) | 4.79 | 4.14 | 5.24 |
| | 500% modulus (MPa) | 12.89 | 10.49 | 14.76 |
| | Elongation rate (%) | 617 | 626 | 554 |
| | Tensile strength (MPa) | 32.3 | 28.3 | 22.3 |
| | Stress retention rate (%) | 56.2 | 60.4 | 58.2 |
| | Fatigue durability (min) | >240 | >240 | >240 |
| • Curing condition: at 130° C for 30 min<br>• Experiments 10 to 16 are films. | | | | |

[Table 5-2-1]

| Experimental Examples of Synthetic Latex Composition 9 (acrylonitrile amount: 25% by weight) | | | | | | |
|---|---|---|---|---|---|---|
| | | | Experiment 17 | Experiment 18 | Experiment 19 | Experiment 20 |
| | | | Example | Example | Example | Example |
| Synthetic Latex composition | Synthetic latex composition | | 9 | 9 | 9 | 9 |
| | Formulation (% by weight) | Butadiene | 71 | 71 | 71 | 71 |
| | | Acrylonitrile | 25 | 25 | 25 | 25 |
| | | Methacrylic acid | 4 | 4 | 4 | 4 |
| | MEK-insoluble content (% by weight) | | 69.3 | 69.3 | 69.3 | 69.3 |
| | Mooney viscosity | | ML107 | ML107 | ML107 | ML107 |
| pH | | | 10.0 | 10.0 | 10.0 | 10.0 |
| Crosslinking agent | Epoxy (EX-321) (parts by weig ht) | | 0.3 | 0.5 | 1.0 | 0.5 |
| | Zinc oxide (parts by weight) | | 0.0 | 0.0 | 0.0 | 0.3 |
| Physical properties of molded article | Thickness (mm) | | 0.089 | 0.088 | 0.088 | 0.085 |
| | 100% modulus (MPa) | | 1.48 | 1.53 | 1.68 | 1.71 |
| | 300% modulus (MPa) | | 2.77 | 2.97 | 2.95 | 2.86 |
| | 500% modulus (MPa) | | 5.97 | 6.66 | 6.47 | 5.87 |
| | Elongation rate (%) | | 668 | 645 | 637 | 676 |
| | Tensile strength (MPa) | | 17.1 | 17.3 | 17.0 | 18.1 |
| | Stress retention rate (%) | | 62.2 | 63.8 | 67.8 | 61.1 |
| | Fatigue durability (min) | | >240 | >240 | >240 | >240 |
| • Curing condition: at 130° C for 30 min<br>• Experiments 17 to 23 are films. | | | | | | |

[Table 5-2-2]

| Experimental Examples of Synthetic Latex Composition 9 (acrylonitrile amount: 25% by weight) | | | Experiment 21 | Experiment 22 | Experiment 23 |
|---|---|---|---|---|---|
| | | | Example | Example | Example |
| Synthetic Latex composition | Synthetic latex composition | | 9 | 9 | 9 |
| | Formulation (% by weight) | Butadiene | 71 | 71 | 71 |
| | | Acrylonitrile | 25 | 25 | 25 |
| | | Methacrylic acid | 4 | 4 | 4 |
| | MEK-insoluble content (% by weight) | | 69.3 | 69.3 | 69.3 |
| | Mooney viscosity | | ML107 | ML107 | ML107 |
| pH | | | 10.0 | 10.0 | 10.0 |
| Crosslinking agent | Epoxy (EX-321) (parts by weig ht) | | 0.5 | 1.0 | 1.0 |
| | Zinc oxide (parts by weight) | | 0.5 | 0.3 | 0.5 |
| Physical properties of molded article | Thickness (mm) | | 0.088 | 0.086 | 0.083 |
| | 100% modulus (MPa) | | 1.84 | 1.78 | 2.23 |
| | 300% modulus (MPa) | | 3.27 | 3.26 | 4.74 |
| | 500% modulus (MPa) | | 7.20 | 7.55 | 13.52 |
| | Elongation rate (%) | | 653 | 630 | 580 |
| | Tensile strength (MPa) | | 21.2 | 19.9 | 25.3 |
| | Stress retention rate (%) | | 58.4 | 64.4 | 58.6 |
| | Fatigue durability (min) | | >240 | >240 | >240 |
| • Curing condition: at 130° C for 30 min<br>• Experiments 17 to 23 are films. | | | | | |

[Table 5-3-1]

| Experimental Examples of Synthetic Latex Composition 8 (acrylonitrile amount: 22% by weight) | | | Experiment 24 | Experiment 25 | Experiment 26 | Experiment 27 |
|---|---|---|---|---|---|---|
| | | | Example | Example | Example | Example |
| Synthetic Latex composition | Synthetic latex composition | | 8 | 8 | 8 | 8 |
| | Formulation (% by weight) | Butadiene | 74 | 74 | 74 | 74 |
| | | Acrylonitrile | 22 | 22 | 22 | 22 |
| | | Methacrylic acid | 4 | 4 | 4 | 4 |
| | MEK-insoluble content (% by weight) | | 67.1 | 67.1 | 67.1 | 67.1 |
| | Mooney viscosity | | ML 103 | ML 103 | ML 103 | ML103 |
| pH | | | 10.0 | 10.0 | 10.0 | 10.0 |
| Crosslinking agent | Epoxy (EX-321) (parts by weight) | | 0.3 | 0.5 | 1.0 | 0.5 |
| | Zinc oxide (parts by weight) | | 0.0 | 0.0 | 0.0 | 0.3 |

(continued)

| Experimental Examples of Synthetic Latex Composition 8 (acrylonitrile amount: 22% by weight) | | | | | |
|---|---|---|---|---|---|
| | | Experiment 24 | Experiment 25 | Experiment 26 | Experiment 27 |
| | | Example | Example | Example | Example |
| Physical Properties of molded article | Thickness (mm) | 0.084 | 0.081 | 0.076 | 0.087 |
| | 100% modulus (MPa) | 1.63 | 1.46 | 1.80 | 1.50 |
| | 300% modulus (MPa) | 2.75 | 2.79 | 3.41 | 2.94 |
| | 500% modulus (MPa) | 5.74 | 6.13 | 8.29 | 6.64 |
| | Elongation rate (%) | 666 | 655 | 591 | 634 |
| | Tensile strength (MPa) | 14.6 | 16.1 | 15.9 | 15.7 |
| | Stress retention rate (%) | 61.7 | 64.5 | 66.9 | 60.7 |
| | Fatigue durability (min) | >240 | >240 | >240 | >240 |
| • Curing condition: at 130° C for 30 min<br>• Experiments 24 to 30 are films. | | | | | |

[Table 5-3-2]

| Experimental Examples of Synthetic Latex Composition 8 (acrylonitrile amount: 22% by weight) | | | | | |
|---|---|---|---|---|---|
| | | | Experiment 28 | Experiment 29 | Experiment 30 |
| | | | Example | Example | Example |
| Synthetic Latex composition | Synthetic latex composition | | 8 | 8 | 8 |
| | Formulation (% by weight) | Butadiene | 74 | 74 | 74 |
| | | Acrylonitrile | 22 | 22 | 22 |
| | | Methacrylic acid | 4 | 4 | 4 |
| | MEK-insoluble content (% by weight) | | 67.1 | 67.1 | 67.1 |
| | Mooney viscosity | | ML103 | ML103 | ML103 |
| pH | | | 10.0 | 10.0 | 10.0 |
| Crosslinking agent | Epoxy (EX-321) (parts by weight) | | 0.5 | 1.0 | 1.0 |
| | Zinc oxide (parts by weight) | | 0.5 | 0.3 | 0.5 |
| Physical Properties of molded article | Thickness (mm) | | 0.09 | 0.085 | 0.087 |
| | 100% modulus (MPa) | | 1.60 | 1.58 | 1.69 |
| | 300% modulus (MPa) | | 3.29 | 3.38 | 3.66 |
| | 500% modulus (MPa) | | 7.87 | 8.71 | 9.44 |
| | Elongation rate (%) | | 628 | 600 | 599 |
| | Tensile strength (MPa) | | 19.5 | 18.9 | 19.8 |
| | Stress retention rate (%) | | 59 | 63.8 | 60.2 |
| | Fatigue durability (min) | | >240 | >240 | >240 |
| • Curing condition: at 130° C for 30 min<br>• Experiments 24 to 30 are films. | | | | | |

First, looking at the synthetic latex compositions 1, 9 and 8 in which the amount of acrylonitrile was 27% by weight, 25% by weight and 22% by weight, respectively, all of these compositions had a sufficient flexibility as compared to conventional XNBR gloves. Particularly, the flexibility was highest when the amount of acrylonitrile was 22% by weight.

The stress retention rate was also favorable at about 60%.

Further, looking at those cases where only the epoxy crosslinking agent was used in varying amounts of 0.3% by weight, 0.5% by weight and 1.0% by weight, a larger amount of the epoxy crosslinking agent resulted in a higher stress retention rate. On the other hand, the flexibility and the elongation were reduced.

Moreover, good stress retention rate was maintained by a combination of the epoxy crosslinking agent and zinc oxide. The flexibility was also very good as compared to conventional gloves; however, it was observed that an increase in the amount of zinc had a tendency of reducing the flexibility and the elongation. In consideration of this, it is believed that an amount of 0.2 to 0.7 parts by weight is appropriate for zinc oxide when added. It is believed that an appropriate amount of the epoxy crosslinking agent is about 0.2 to 2.0 parts by weight, and that the stress retention rate would exceed 70% if the epoxy crosslinking agent is added in an amount of greater than 1.0 parts by weight; however, the flexibility and the elongation are reduced instead.

It is noted here that the dip molding compositions in Experiment D had a pH of 10.0. When the pH is higher than 10.5, the amount of carboxyl groups oriented on the outside at the particle interfaces is increased, resulting in a reduction in the strength of epoxy crosslinks mainly constituting intraparticle crosslinks. On the other hand, when the pH is lower than 9.5, the amount of embedded carboxylic acid crosslinking with epoxy is increased, and this leads to an increased film flexibility; however, it also causes stickiness and the like, making it difficult to form a film.

Furthermore, the epoxy crosslinking agent EX-321 used in all of the present experiments had an equivalent of 140 g/eq. The equivalent of an epoxy crosslinking agent is preferably 100 to 200 g/eq; however, when an epoxy crosslinking agent having a greater equivalent is used, the same results as those obtained in the present experiments can be obtained by increasing the amount of the epoxy crosslinking agent.

<Experiment E>

The intrinsic properties of the synthetic latex compositions 1, 8 and 9 (physical properties of films that were crosslinked only with calcium derived from a coagulant in the absence of a crosslinking agent) are shown in Table 6.

[Table 6]

| | | | | | |
|---|---|---|---|---|---|
| Synthetic latex composition | Synthetic latex composition | | 1 | 9 | 8 |
| | Formulation (% by weight) | Butadiene | 69.0 | 71.0 | 74.0 |
| | | Acrylonitrile | 27.0 | 25.0 | 22.0 |
| | | Methacrylic acid | 4.0 | 4.0 | 4.0 |
| | MEK-insoluble content (% by weight) | | 68.0 | 70.0 | 67.0 |
| | Mooney viscosity | | MS113 | ML107 | MS103 |
| Intrinsic properties | 500% modulus (MPa) | | 6.49 | 4.5 | 4.62 |
| | Elongation rate (%) | | 679 | 724 | 726 |
| | Tensile strength (MPa) | | 18.8 | 14.4 | 14.3 |
| | Stress retention rate (%) | | 58.9 | 58.9 | 59.7 |

As demonstrated above, according to the present invention, not only a dip-molded article having excellent stress retention rate and flexibility that are similar to those of natural rubber can be provided using a carboxyl group-containing nitrile rubber elastomer, but also a dip molding composition for producing the dip-molded article and a method of producing the dip-molded article can be provided.

## Claims

**1.** A dip molding composition, comprising at least:

a carboxyl group-containing nitrile rubber elastomer;
an epoxy crosslinking agent comprising an epoxy compound that contains three or more glycidyl ether groups in one molecule and has a basic skeleton containing an alicyclic, aliphatic or aromatic hydrocarbon; and
a pH modifier,
wherein

the elastomer comprises 50% by weight or more, 78% by weight or less of a conjugated diene monomer-derived structural unit, 20% by weight or more, 30% by weight or less of an ethylenically unsaturated nitrile monomer-derived structural unit, and 3.5% by weight or more, 6% by weight or less of an ethylenically unsaturated carboxylic acid monomer-derived structural unit,

the elastomer has an MEK-insoluble content of 60% by weight or more, 80% by weight or less in accordance with the measuring method as explained in the description, and

the epoxy crosslinking agent has an MIBK/water distribution ratio of 50% or higher as determined by the following measurement method:

Method of measuring the MIBK/water distribution ratio: in a test tube, 5.0 g of water, 5.0 g of methyl isobutyl ketone (MIBK) and 0.5 g of the epoxy crosslinking agent are precisely weighed and mixed with stirring at 23°C $\pm$ 2°C for 3 minutes, and the resulting mixture is centrifuged at 1.0 $\times$ $10^3$ G for 10 minutes and thereby separated into an aqueous layer and an MIBK layer, after which the MIBK layer is fractionated and weighed to calculate the MIBK/water distribution ratio using the following equation:

MIBK/water distribution ratio (%) = (Weight of separated MIBK layer (g) - --> Weight of MIBK before separation (g))/Weight of added crosslinking agent (g) $\times$ 100

this measurement is performed three times, and an average value thereof is defined as the MIBK/water distribution ratio.

**2.** The dip molding composition according to claim 1, wherein the elastomer comprises 3.5% by weight or more, 5.0% by weight or less of the ethylenically unsaturated carboxylic acid monomer-derived structural unit.

**3.** The dip molding composition according to claim 1 or 2, wherein the epoxy crosslinking agent is added in an amount of 0.3 parts by weight or more, 2.5 parts by weight or less with respect to 100 parts by weight of the elastomer.

**4.** The dip molding composition according to any one of claims 1 to 3, wherein the pH is adjusted to be 9.5 or higher, 10.5 or lower by the pH modifier.

**5.** The dip molding composition according to any one of claims 1 to 4, further comprising zinc oxide as a crosslinking agent.

**6.** The dip molding composition according to claim 5, wherein zinc oxide is added in an amount of 0.2 parts by weight or more, 0.6 parts by weight or less with respect to 100 parts by weight of the elastomer.

**7.** The dip molding composition according to any one of claims 1 to 6, having an MEK swelling rate of 5 times or higher, 10 times or lower.

**8.** A molded article, which is a cured product of the dip molding composition according to any one of claims 1 to 7.

**9.** The molded article according to claim 8, having a stress retention rate of 50% or higher as determined by the following measurement method:
Method of measuring the stress retention rate: in accordance with ASTM D412, a test piece is prepared, marked with lines at a gauge mark distance of 25 mm, and stretched at a chuck distance of 90 mm and a tensile speed of 500 mm/min; once the test piece is stretched two folds, the stretching is terminated to measure a stress M0; the test piece is maintained and a stress M6 is measured after a lapse of 6 minutes; and the stress retention rate is calculated using the following equation:

$$\text{Stress retention rate (\%)} = (M6/M0) \times 100.$$

**10.** The molded article according to claim 8 or 9, which is a glove.

**11.** A method of producing a dip-molded article, the method comprising:

(1) a coagulant adhesion step of allowing a coagulant to adhere to a glove forming mold;
(2) a maturation step of preparing and stirring the dip molding composition according to any one of claims 1 to 7;
(3) a dipping step of immersing the glove forming mold in the dip molding composition;

(4) a gelling step of gelling a film formed on the glove forming mold to prepare a cured film precursor;
(5) a leaching step of removing impurities from the cured film precursor thus formed on the glove forming mold;
(6) a beading step of making a roll in a cuff portion of a glove to be obtained; and
(7) a curing step of heating and drying the cured film precursor at a temperature required for crosslinking reaction,

which steps (3) to (7) are performed in the order mentioned.

## Patentansprüche

1. Zusammensetzung für Tauchformen, die mindestens Folgendes umfasst:

ein Nitrilkautschuk-Elastomer, das eine Carboxylgruppe enthält;
ein Epoxid-Vernetzungsmittel, umfassend eine Epoxidverbindung, die drei oder mehr Glycidylethergruppen in einem Molekül enthält und ein basisches Grundgerüst mit einem alicyclischen, aliphatischen oder aromatischen Kohlenwasserstoff aufweist; und
einen pH-Modifikator,
wobei
das Elastomer 50 Gew.-% oder mehr, 78 Gew.-% oder weniger einer von einem konjugierten Dienmonomer abgeleiteten Struktureinheit, 20 Gew.-% oder mehr, 30 Gew.-% oder weniger einer von einem ethylenisch ungesättigten Nitrilmonomer abgeleiteten Struktureinheit und 3,5 Gew.-% oder mehr, 6 Gew.-% oder weniger einer von ethylenisch ungesättigten Carbonsäure-Monomeren abgeleiteten Struktureinheit umfasst,
das Elastomer einen Gehalt an MEK-unlöslichen Bestandteilen von 60 Gew.-% oder mehr, 80 Gew.-% oder weniger gemäß dem in der Beschreibung erläuterten Messverfahren aufweist, und
das Epoxid-Vernetzungsmittel ein MIBK/Wasser-Verteilungsverhältnis von 50 % oder höher aufweist, bestimmt durch das folgende Messverfahren:
Verfahren zur Messung des Verteilungsverhältnisses von MIBK und Wasser: in einem Reagenzglas werden 5,0 g Wasser, 5,0 g Methylisobutylketon (MIBK) und 0,5 g des Epoxid-Vernetzungsmittels genau abgewogen und unter Rühren bei 23 °C ± 2 °C 3 Minuten lang gemischt, und die resultierende Mischung wird 10 Minuten lang bei 1,0 * $10^3$ G zentrifugiert, wodurch sie sich in eine wässrige Schicht und eine MIBK-Schicht trennt, woraufhin die MIBK-Schicht fraktioniert und gewogen wird, um das Verteilungsverhältnis von MIBK und Wasser unter Verwendung der folgenden Gleichung zu berechnen:

MIBK/Wasser-Verteilungsverhältnis (%) = (Gewicht der abgetrennten MIBK-Schicht (g) - Gewicht des MIBK vor der Trennung (g))/Gewicht des zugegebenen Vernetzungsmittels (g) × 100

diese Messung wird dreimal durchgeführt, und der Durchschnittswert davon wird als MIBK/Wasser-Verteilungsverhältnis definiert.

2. Zusammensetzung für Tauchformen nach Anspruch 1, wobei das Elastomer 3,5 Gew.-% oder mehr, 5,0 Gew.-% oder weniger der von ethylenisch ungesättigten Carbonsäure aus einem Monomer abgeleiteten Struktureinheit umfasst.

3. Zusammensetzung für Tauchformen nach Anspruch 1 oder 2, wobei das Epoxid-Vernetzungsmittel in einer Menge von 0,3 Gewichtsteilen oder mehr, 2,5 Gewichtsteilen oder weniger, bezogen auf 100 Gewichtsteile des Elastomers, zugegeben wird.

4. Zusammensetzung für Tauchformen nach einem der Ansprüche 1 bis 3, wobei der pH-Wert durch den pH-Modifikator auf 9,5 oder höher, 10,5 oder niedriger eingestellt wird.

5. Zusammensetzung für Tauchformen nach einem der Ansprüche 1 bis 4, weiter umfassend Zinkoxid als Vernetzungsmittel.

6. Zusammensetzung für Tauchformen nach Anspruch 5, wobei Zinkoxid in einer Menge von 0,2 Gewichtsteilen oder mehr, 0,6 Gewichtsteilen oder weniger, bezogen auf 100 Gewichtsteile des Elastomers, zugegeben wird.

7. Zusammensetzung für Tauchformen nach einem der Ansprüche 1 bis 6, die eine MEK-Schwellungsrate von 5-fach oder höher, 10-fach oder niedriger aufweist.

**8.** Formteil, das ein ausgehärtetes Produkt der Zusammensetzung für Tauchformen nach einem der Ansprüche 1 bis 7 ist.

**9.** Formteil nach Anspruch 8, das eine Restspannungsrate von 50 % oder mehr aufweist, bestimmt nach dem folgenden Messverfahren:
Verfahren zur Messung der Restspannungsrate: gemäß ASTM D412 wird ein Prüfstück erstellt, mit Linien in einem Abstand von 25 mm markiert und bei einem Spannfutterabstand von 90 mm und einer Zuggeschwindigkeit von 500 mm/min gedehnt; sobald das Prüfstück zweifach gedehnt ist, wird die Dehnung beendet, um eine Spannung M0 zu messen; das Prüfstück wird gehalten und nach Ablauf von 6 Minuten wird eine Spannung M6 gemessen; und die Restspannungsrate wird unter Verwendung der folgenden Gleichung berechnet:

$$\text{Restspannungsrate (\%)} = (M6/M0) \times 100.$$

**10.** Formteil nach Anspruch 8 oder 9, das ein Handschuh ist.

**11.** Verfahren zur Herstellung eines Tauchformteils, wobei das Verfahren Folgendes umfasst:

(1) einen Koagulierungsmittel-Adhäsionsschritt, bei dem es einem Koagulierungsmittel ermöglicht wird, an einer Handschuhform zu haften;
(2) einen Reifungsschritt zum Herstellen und Rühren der Zusammensetzung für Tauchformen nach einem der Ansprüche 1 bis 7;
(3) einen Tauchschritt, bei dem die Handschuhform in die Zusammensetzung für Tauchformen eingetaucht wird;
(4) einen Gelierungsschritt, bei dem ein auf der Handschuhform gebildeter Film geliert wird, um einen ausgehärteten Filmvorläufer zu erstellen;
(5) ein Auslaugungsschritt zum Entfernen von Verunreinigungen aus dem derart auf der Handschuhform gebildeten ausgehärteten Filmvorläufer;
(6) ein Perlenbildungsschritt, bei dem eine Rolle in einem Manschettenbereich eines zu erzeugenden Handschuhs gebildet wird; und
(7) einen Aushärtungsschritt, bei dem der ausgehärtete Filmvorläufer bei einer für die Vernetzungsreaktion erforderlichen Temperatur erwärmt und getrocknet wird,

wobei diese Schritte (3) bis (7) in der angegebenen Reihenfolge durchgeführt werden.

## Revendications

**1.** Composition pour moulage par immersion, comprenant au moins :

un élastomère en caoutchouc de nitrile contenant un groupe carboxyle ;
un agent de réticulation époxy comprenant un composé époxy qui contient trois groupes d'éther glycidylique ou plus dans une molécule et présente un squelette de base contenant un hydrocarbure alicyclique, aliphatique ou aromatique ; et
un régulateur de pH,
dans laquelle
l'élastomère comprend 50 % en poids ou plus, 78 % en poids ou moins d'un motif structural dérivé d'un monomère diénique conjugué, 20 % en poids ou plus, 30 % en poids ou moins d'un motif structural dérivé d'un monomère nitrile à insaturation éthylénique, et 3,5 % en poids ou plus, 6 % en poids ou moins d'un motif structural dérivé d'un monomère d'acide carboxylique à insaturation éthylénique,
l'élastomère présente une teneur en matières insolubles dans la MEK de 60 % en poids ou plus, 80 % en poids ou moins conformément au procédé de mesure tel qu'expliqué dans la description, et
l'agent de réticulation époxy présente un rapport de distribution MIBK/eau de 50 % ou plus tel que déterminé par le procédé de mesure suivant :
Procédé de mesure du rapport de distribution MIBK/eau : dans un tube à essai, 5,0 g d'eau, 5,0 g de méthylisobutylcétone (MIBK) et 0,5 g de l'agent de réticulation époxy sont précisément pesés et mélangés par agitation à 23 °C $\pm$ 2 °C pendant 3 minutes, et le mélange résultant est centrifugé à $1{,}0 * 10^3$ G pendant 10 minutes, et ainsi séparé en une couche aqueuse et une couche de MIBK, après quoi la couche de MIBK est fractionnée et pesée pour calculer le rapport de distribution MIBK/eau en utilisant l'équation suivante :

Rapport de distribution MIBK/eau (%) = (Poids de la couche de MIBK séparée (g) - Poids de MIBK avant séparation (g))/Poids de l'agent de réticulation ajouté (g) x 100

ce mesurage est effectué trois fois, et une valeur moyenne de celui-ci est définie comme le rapport de distribution MIBK/eau.

**2.** Composition pour moulage par immersion selon la revendication 1, dans laquelle l'élastomère comprend 3,5 % en poids ou plus, 5,0 % en poids ou moins du motif structural dérivé d'un monomère d'acide carboxylique à insaturation éthylénique.

**3.** Composition pour moulage par immersion selon la revendication 1 ou 2, dans laquelle l'agent de réticulation époxy est ajouté dans une quantité de 0,3 partie en poids ou plus, 2,5 parties en poids ou moins par rapport à 100 parties en poids de l'élastomère.

**4.** Composition pour moulage par immersion selon l'une quelconque des revendications 1 à 3, dans laquelle le pH est ajusté pour être 9,5 ou plus, 10,5 ou moins par le régulateur de pH.

**5.** Composition pour moulage par immersion selon l'une quelconque des revendications 1 à 4, comprenant en outre un oxyde de zinc comme agent de réticulation.

**6.** Composition pour moulage par immersion selon la revendication 5, dans laquelle un oxyde de zinc est ajouté dans une quantité de 0,2 partie en poids ou plus, 0,6 partie en poids ou moins par rapport à 100 parties en poids de l'élastomère.

**7.** Composition pour moulage par immersion selon l'une quelconque des revendications 1 à 6, présentant un taux de gonflement par la MEK de 5 fois ou plus, 10 fois ou moins.

**8.** Article moulé, qui est un produit durci de la composition pour moulage par immersion selon l'une quelconque des revendications 1 à 7.

**9.** Article moulé selon la revendication 8, présentant un taux de rétention de contrainte de 50 % ou plus tel que déterminé par le procédé de mesure suivant :
Procédé de mesure du taux de rétention de contrainte : conformément à l'ASTM D412, une éprouvette est préparée, marquée avec des lignes à une distance de marques de référence de 25 mm, et étirée à une distance entre mandrins de 90 mm et une vitesse de traction de 500 mm/min ; une fois que l'éprouvette est étirée à deux reprises, l'étirement est arrêté pour mesurer une contrainte M0 ; l'éprouvette est maintenue et une contrainte M6 est mesurée après un laps de temps de 6 minutes ; et le taux de rétention de contrainte est calculé en utilisant l'équation suivante :

$$\text{Taux de rétention de contrainte (\%)} = (M6/M0) \times 100.$$

**10.** Article moulé selon la revendication 8 ou 9, qui est un gant.

**11.** Procédé de production d'un article moulé par immersion, le procédé comprenant :

(1) une étape d'adhésion de coagulant consistant à laisser un coagulant adhérer à un moule de formage de gant ;
(2) une étape de maturation consistant à préparer et agiter la composition pour moulage par immersion selon l'une quelconque des revendications 1 à 7 ;
(3) une étape d'immersion consistant à immerger le moule de formage de gant dans la composition pour moulage par immersion ;
(4) une étape de gélification consistant à gélifier un film formé sur le moule de formage de gant de manière à préparer un précurseur de film durci ;
(5) une étape de lixiviation consistant à éliminer les impuretés du précurseur de film durci ainsi formé sur le moule de formage de gant ;
(6) une étape de bordage consistant à fabriquer un rouleau dans une partie de poignet d'un gant destiné à être obtenu ; et
(7) une étape de durcissement consistant à chauffer et sécher le précurseur de film durci à une température requise pour une réaction de réticulation,

lesquelles étapes (3) à (7) sont effectuées dans l'ordre mentionné.

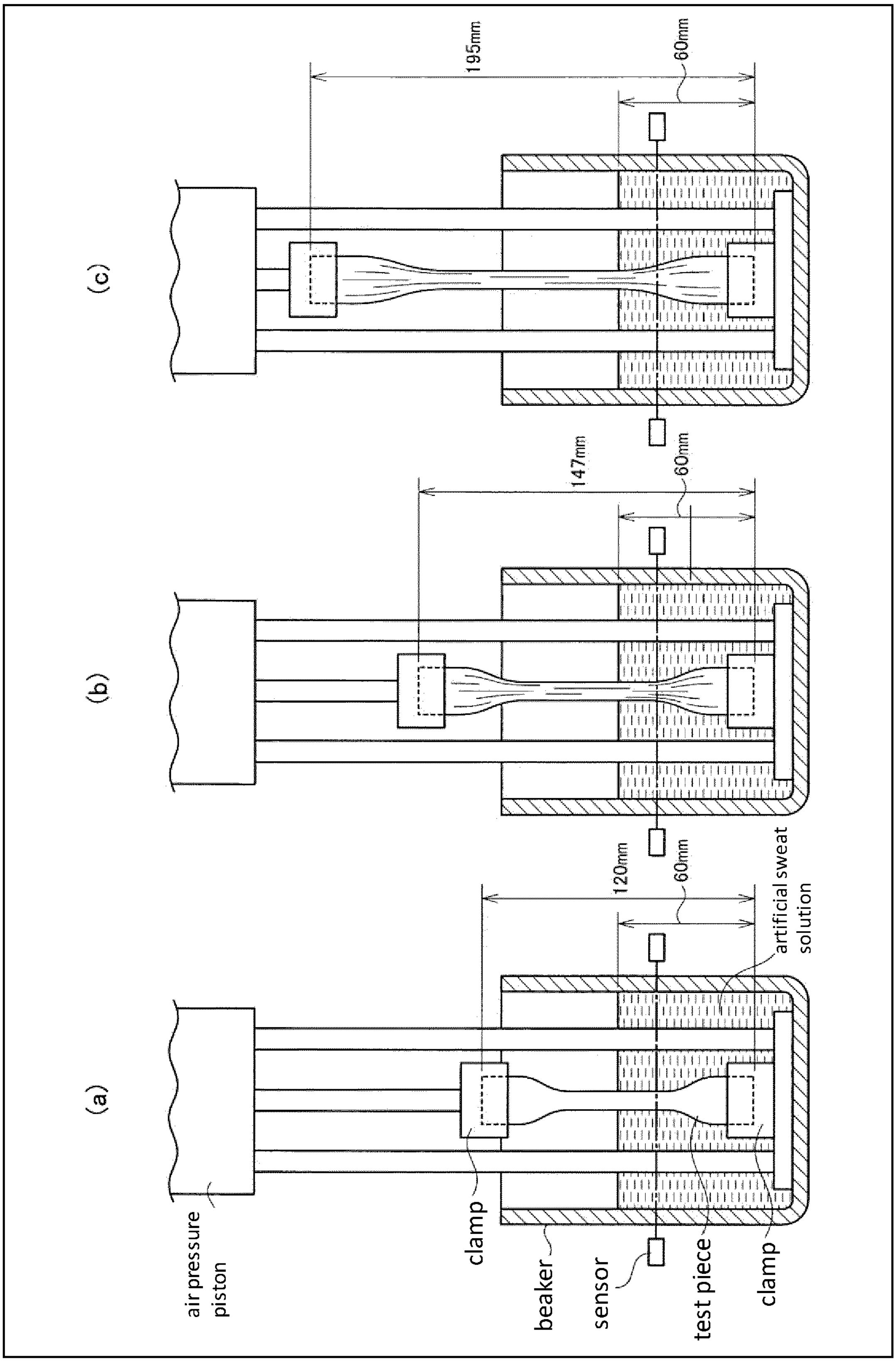
(a)
(b)
(c)
air pressure piston
clamp
beaker
sensor
test piece
clamp
artificial sweat solution
120mm
60mm
147mm
60mm
195mm
60mm

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012043894 A
- WO 2017217542 A
- WO 2019194056 A
- JP 2018009272 A
- EP 3575357 A1